(19) Europäisches Patentamt
European Patent Office
Office européen des brevets

(11) EP 4 335 886 A1

(12) **EUROPEAN PATENT APPLICATION**
published in accordance with Art. 153(4) EPC

(43) Date of publication:
**13.03.2024 Bulletin 2024/11**

(21) Application number: **22798883.9**

(22) Date of filing: **21.04.2022**

(51) International Patent Classification (IPC):
***C08G 59/06*** *(2006.01)* ***C08G 61/10*** *(2006.01)*
***C08K 7/02*** *(2006.01)* ***C08L 63/04*** *(2006.01)*
***C08J 5/04*** *(2006.01)*

(52) Cooperative Patent Classification (CPC):
**C08G 59/06; C08G 61/10; C08J 5/04; C08K 7/02; C08L 63/04**

(86) International application number:
**PCT/JP2022/018353**

(87) International publication number:
**WO 2022/234776 (10.11.2022 Gazette 2022/45)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.05.2021 JP 2021078718**

(71) Applicant: **DIC Corporation**
**Tokyo 174-8520 (JP)**

(72) Inventors:
- **ONDA, Shinji**
  **Ichihara-shi, Chiba 290-8585 (JP)**
- **MORINAGA, Kunihiro**
  **Ichihara-shi, Chiba 290-8585 (JP)**

(74) Representative: **TBK**
**Bavariaring 4-6**
**80336 München (DE)**

# (54) PHENOLIC RESIN, EPOXY RESIN, CURABLE RESIN COMPOSITION, CURED ARTICLE, FIBER-REINFORCED COMPOSITE MATERIAL, AND FIBER-REINFORCED RESIN MOLDED ARTICLE

(57) Provided is a phenolic resin being a reaction product of a catechol compound and an ortho-xylylene skeleton-containing compound, and having a catechol skeleton derived from the catechol compound and an ortho-xylylene skeleton derived from the ortho-xylylene skeleton-containing compound. A cured product obtained by using an epoxy resin obtained by using this phenolic resin can exhibit high heat resistance and high bending properties (bending strength, bending elastic modulus, and the like) and is thus suitably used for fiber-reinforced composite materials and fiber-reinforced resin molded products. Selected Drawing: FIG. 7

[Fig.7]

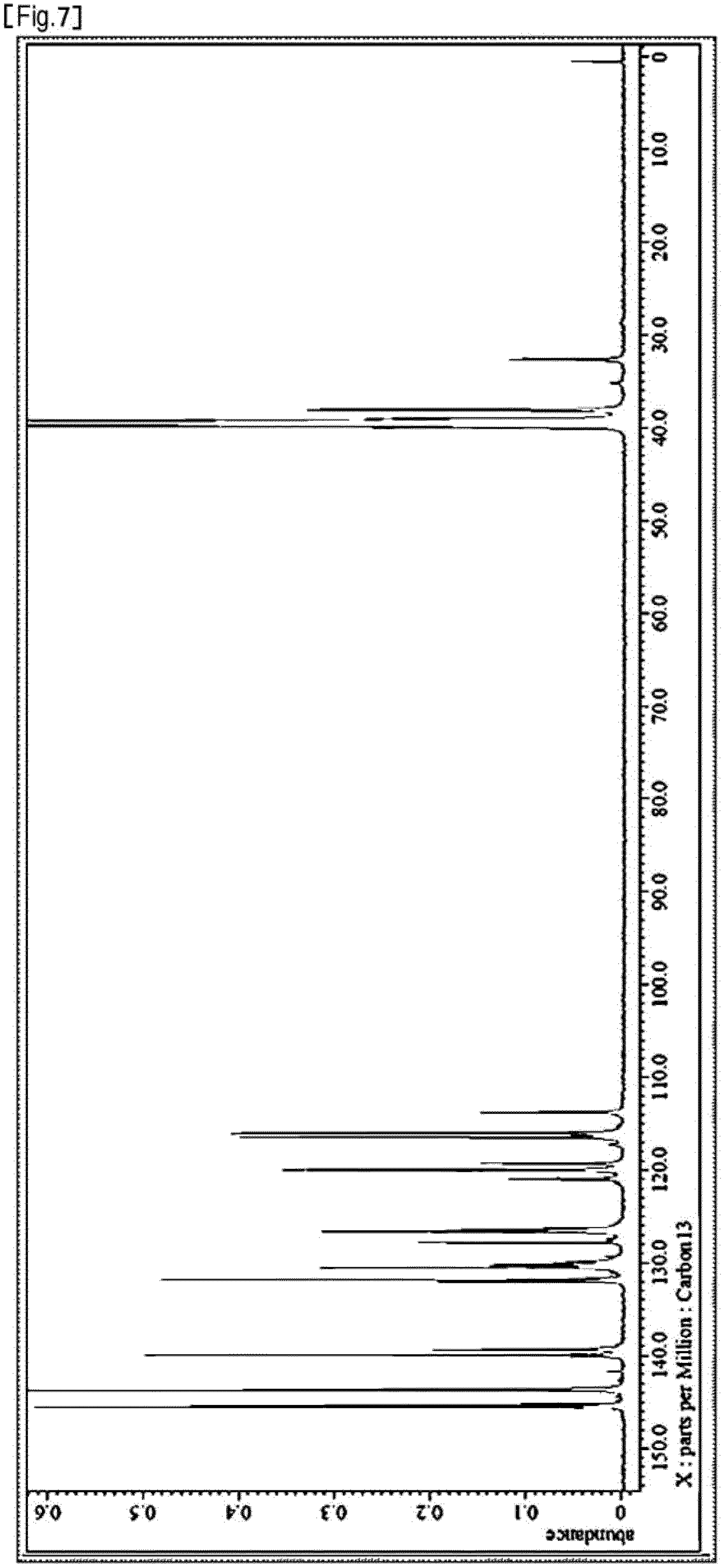

## Description

### Technical Field

The present invention relates to a phenolic resin having a specific structure, an epoxy resin obtained using the phenolic resin, a curable resin composition containing the epoxy resin, a cured product obtained from the curable resin composition, a fiber-reinforced composite material, and a fiber-reinforced resin molded product.

### Background Art

Curable resin compositions containing epoxy resins and their curing agents as essential components have excellent mechanical strength, heat resistance, water resistance, chemical resistance, insulation properties, and the like in their cured products, thus have a wide range of applications, and are widely used in matrices for fiber-reinforced composite materials, heat-dissipating members, paint, semiconductors, printed wiring boards, and the like.

Among them, fiber-reinforced resin molded products reinforced with reinforcing fibers are attracting attention for their features of excellent mechanical strength despite their light weight, and their use is expanding in various structural applications, including housings and various components for automobiles, aircraft, ships, and the like. In particular, along with expansion of the use of carbon fiber-reinforced plastic (CFRP) in the aircraft and automobile fields, the use amount of epoxy resins as its matrix resins continues to increase.

Currently, examples of epoxy resins mainly used in the applications of carbon fiber-reinforced plastic include diglycidyl ether of bisphenol A and tetraglycidylamine of diaminodiphenylmethane (TGDDM) (refer to PTL 1, for example). These epoxy resins meet the required properties of the applications of carbon fiber-reinforced plastic, such as elastic modulus, strength, heat resistance, and wet and heat resistance, at a certain level.

However, there is a current market need for even higher elastic modulus, higher strength, and higher heat resistance, and the physical properties of the epoxy resins have yet to fully meet market requirements.

### Citation List

### Patent Literature

PTL 1: Japanese Unexamined Patent Application Publication No. 2003-201388

### Summary of Invention

### Technical Problem

Thus, an object of the present invention is to provide a phenolic resin having a specific structure used to obtain an epoxy resin having low viscosity and excellent handling properties, the epoxy resin that can produce a cured product having high heat resistance and high bending properties (bending strength, bending elastic modulus, and the like), a curable resin composition containing the epoxy resin, a cured product obtained from the curable resin composition, a fiber-reinforced composite material, and a fiber-reinforced resin molded product.

### Solution to Problem

To achieve the above object, the inventor of the present invention has conducted earnest study to find that a cured product obtained by using a curable resin composition containing an epoxy resin obtained by using a phenolic resin having a specific structure and having low viscosity and excellent handling properties exhibits high heat resistance and high bending properties (bending strength, bending elastic modulus, and the like) and has completed the present invention.

Specifically, the present invention relates to a phenolic resin being a reaction product of a catechol compound and an ortho-xylylene skeleton-containing compound, and having a catechol skeleton derived from the catechol compound and an ortho-xylylene skeleton derived from the ortho-xylylene skeleton-containing compound.

The phenolic resin of the present invention is preferably represented by General Formula (1) below.

[Chem. 1]

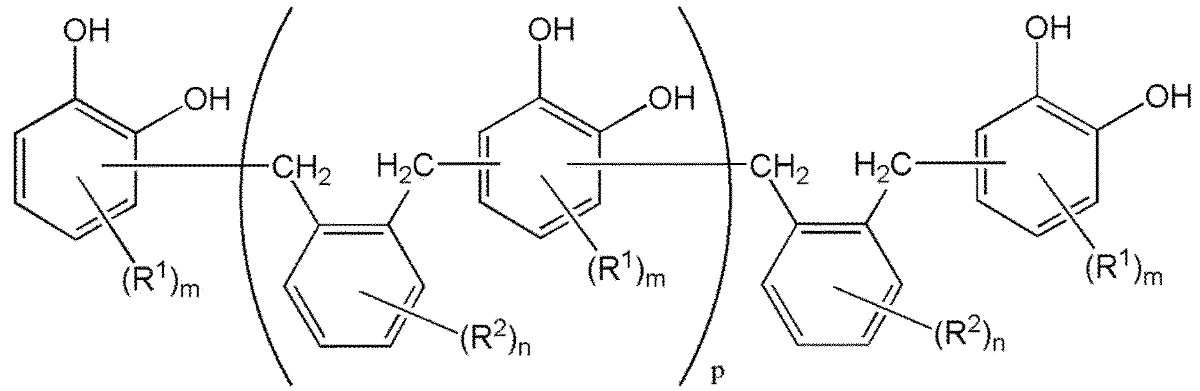

・・・(1)

(In Formula (1), $R^1$ is represented by a hydrogen atom, a $C_{1-4}$ hydrocarbon group, or a $C_{1-4}$ alkoxy group; $R^2$ is represented by a hydrogen atom or a methyl group; m is represented by an integer of 0 to 2; n is represented by an integer of 0 to 4; and p is represented by an integer of 0 to 50.)

The present invention relates to an epoxy resin being a reaction product having a glycidyl ether group resulting from a reaction of a phenolic hydroxy group of the phenolic resin and epihalohydrin.

The epoxy resin of the present invention is preferably represented by General Formula (2) below.

[Chem. 2]

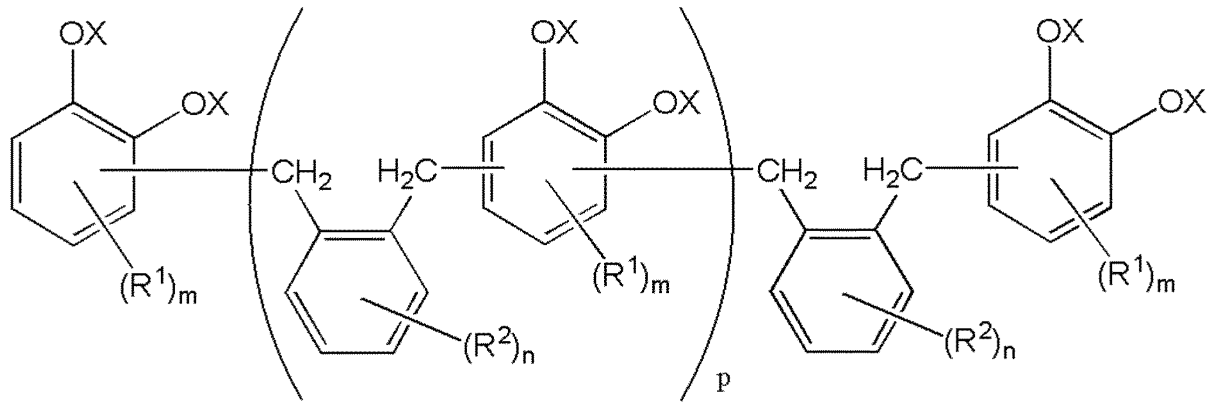

・・・(2)

[Chem. 3]

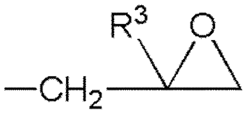

・・・(3)

(In Formula (2), X is represented by Formula (3), $R^1$ is represented by a hydrogen atom, a $C_{1-4}$ hydrocarbon group, or a $C_{1-4}$ alkoxy group; $R^2$ is represented by a hydrogen atom or a methyl group; $R^3$ is represented by a hydrogen atom or a methyl group; m is represented by an integer of 0 to 2; n is represented by an integer of 0 to 4; and p is represented by an integer of 0 to 50.)

The epoxy resin of the present invention preferably has an epoxy equivalent of 130 to 250 g/equivalent.

The epoxy resin of the present invention preferably has a melt viscosity at 150°C of 2.0 dPa.s or less.

The present invention relates to a curable resin composition containing the epoxy resin.

The present invention relates to a cured product obtained by subjecting the curable resin composition to a curing reaction.

The present invention relates to a fiber-reinforced composite material containing the curable resin composition and reinforcing fibers.

The present invention relates to a fiber-reinforced resin molded product containing the cured product and reinforcing fibers.

Advantageous Effects of Invention

According to the present invention, the cured product obtained by using the epoxy resin obtained by using the phenolic resin having a specific structure can exhibit high heat resistance and high bending properties (bending strength, bending elastic modulus, and the like), which is useful.

Description of Embodiments

[Phenolic Resin]

The present invention relates to a phenolic resin being a reaction product of a catechol compound and an ortho-xylylene skeleton-containing compound, and having a catechol skeleton derived from the catechol compound and an ortho-xylylene skeleton derived from the ortho-xylylene skeleton-containing compound.

It is presumed that the phenolic resin contains a catechol skeleton (having two hydroxy groups as substituents on an aromatic ring, in which the two hydroxy groups are in an ortho-positional relation with each other) derived from the catechol compound, thus making the distance between the functional groups short and making an intermolecular gap narrow, and thus a resultant cured product shows a high elastic modulus, and being polyfunctional makes the resultant cured product show high heat resistance, which is preferred.

In addition, it is presumed that the phenolic resin contains an ortho-xylylene skeleton derived from the ortho-xylylene skeleton-containing compound and thus has a bent structure and has a narrow intermolecular gap, and thus a cured product obtained by the use of an epoxy resin using the resultant phenolic resin can exhibit a high elastic modulus. In addition, intermolecular interaction is moderately weakened, thus giving a phenolic resin having low melt viscosity and having excellent handling properties, which is preferred.

The "phenolic resin" refers to a resin containing a compound containing at least a phenolic hydroxy group.

The "catechol skeleton" refers to a "skeleton having two hydroxy groups as substituents on an aromatic ring, in which the two hydroxy groups are in an ortho-positional relation with each other" or a skeleton obtained by removing one hydrogen atom each forming the hydroxy groups from the "skeleton having two hydroxy groups as substituents on an aromatic ring, in which the two hydroxy groups are in an ortho-positional relation with each other."

The "ortho-xylylene skeleton" refers to a skeleton having two methylene groups as substituents in an ortho-positional relation on an aromatic ring, linking together compounds containing at least a phenolic hydroxy group contained in the phenolic resin.

[Catechol Compound]

The phenolic resin is a reaction product of a catechol compound and an ortho-xylylene skeleton-containing compound. The catechol compound is a dihydroxybenzene having hydroxy groups at the 1-position and the 2-position and may have only hydrogen atoms without substituents on the aromatic ring of the catechol compound or may have, instead of the hydrogen atoms, a $C_{1-4}$ hydrocarbon group or a $C_{1-4}$ alkoxy group as a substituent, in which the substituent may be an alkyl group such as a methyl group or a tert-butyl group. It is presumed that by using the catechol compound, the phenolic resin will contain (introduce) a catechol skeleton, making the distance between the functional groups short and making the intermolecular gap narrow, and thus the resultant cured product shows a high elastic modulus, and being polyfunctional makes the resultant cured product show high heat resistance, which is useful.

In the case of having an alkyl group such as a methyl group as the substituent, there is no particular limitation on the position and the number of the substituents. In the case of catechol, it may have one methyl group or tert-butyl group at the 4-position since a cured product having excellent mechanical properties, heat resistance, and hydrophobicity can be obtained, but the case of hydrogen atoms without any substituent (catechol) is most preferred from the viewpoint of bending properties. In addition, as the alkyl group, having an alkyl group having large steric hindrance can contribute to improvement in water absorption resistance, among which 4-methylcatechol, 4-tert-butylcatechol, or the like can be used. When having an alkyl group as the substituent, its number of carbons is preferably 1 to 4. If the number of carbons

is larger than 4, the intermolecular gap becomes larger, and the mechanical strength of the resultant cured product decreases, which is not preferred.

The catechol compound may be used alone, or a plurality of compounds different in the position of the alkyl group such as a methyl group may be used in combination.

[Ortho-Xylylene Skeleton-Containing Compound]

The phenolic resin is a reaction product of a catechol compound and an ortho-xylylene skeleton-containing compound. Containing (introducing) an ortho-xylylene skeleton derived from the ortho-xylylene skeleton-containing compound in the phenolic resin moderately weakens the intermolecular interaction, resulting in a phenolic resin having low melt viscosity and having excellent handling properties, which is preferred. It is considered that using the ortho-xylylene skeleton can bring the distance between the catechol compounds closer, and a closer distance between a plurality of functional groups of the resultant phenolic resin can provide a cured product having excellent mechanical strength and heat resistance, which is preferred.

In addition, it is presumed that by using the ortho-xylylene skeleton-containing compound when synthesizing the phenolic resin, the molecular structure more bends and the free volume becomes smaller in network formation (polymerization) during the production (during the curing) of the cured product than a case in which a para-xylylene compound or the like is used, thus consequently achieving a higher elastic modulus. In other words, becoming the bent structure makes the gap between molecules smaller, makes them tightly packed to achieve hardness, can exhibit higher strength, which is contradictory to a higher elastic modulus, and can achieve both a higher elastic modulus and higher strength, which is useful.

Further, it is presumed that the phenolic resin can exhibit high bending properties by combining the effect of narrowing the intramolecular gap by containing (introducing) the catechol skeleton and the effect of narrowing the intramolecular gap by containing (introducing) the ortho-xylylene skeleton.

Examples of the ortho-xylylene skeleton-containing compound include ortho-xylylene dichloride, ortho-xylylene dibromide, ortho-xylylene dimethoxide, ortho-xylylene diethoxide, and ortho-xylylene glycol. Among them, ortho-xylylene dichloride and the like are preferred from the viewpoint of availability.

The ortho-xylylene skeleton-containing compound may be used alone, or a plurality of compounds may be used in combination.

The phenolic resin of the present invention is preferably represented by General Formula (1) below.

[Chem. 4]

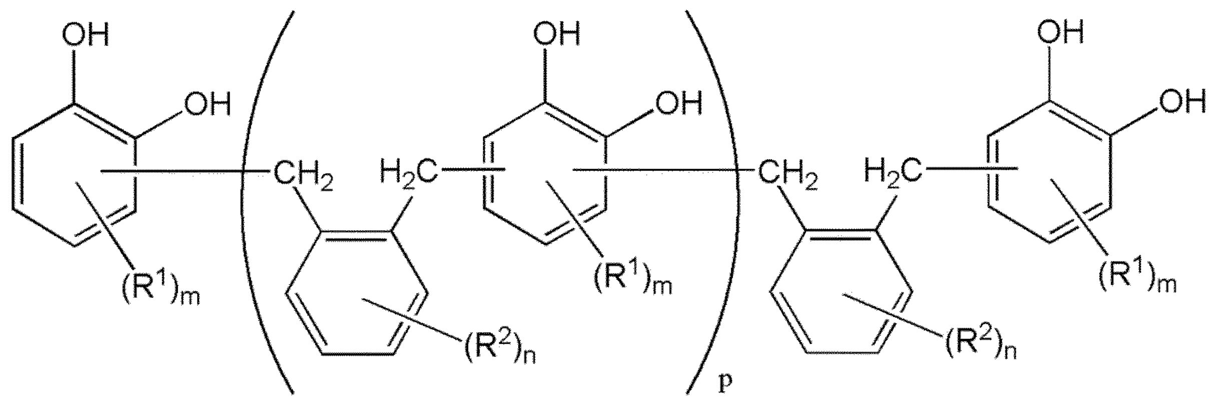

・・・(1)

(In Formula (1), $R^1$ is represented by a hydrogen atom, a $C_{1-4}$ hydrocarbon group, or a $C_{1-4}$ alkoxy group; $R^2$ is represented by a hydrogen atom or a methyl group; m is represented by an integer of 0 to 2; n is represented by an integer of 0 to 4; and p is represented by an integer of 0 to 50.)

As to the phenolic resin represented by General Formula (1) above, a phenolic resin containing the phenolic resin represented by General Formula (1) below can be obtained by, for example, reacting a catechol compound represented by General Formula (A) below and an ortho-xylylene skeleton-containing compound represented by General Formula (B) below (a halogenated (chlorinated) ortho-xylylene skeleton-containing compound is exemplified below).

[Chem. 5]

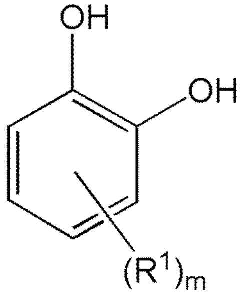

・・・(A)

[Chem. 6]

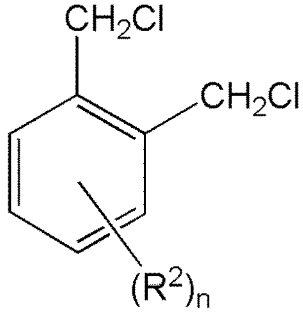

・・・(B)

[Chem. 7]

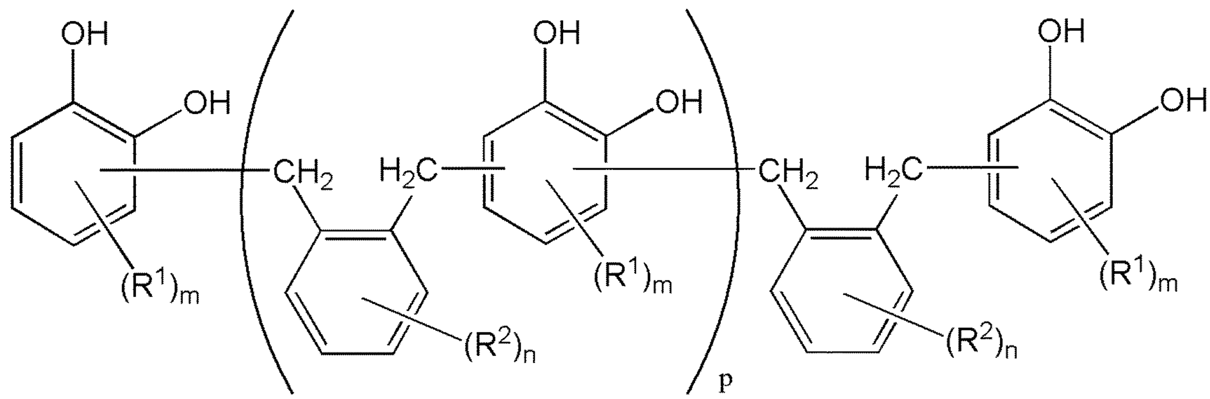

・・・(1)

In General Formula (A) above, the substituent $R^1$ may be a hydrogen atom, a $C_{1-4}$ hydrocarbon group, or a $C_{1-4}$ alkoxy group. From the viewpoint of reactivity when used as a raw material and the bending properties of the cured product, preferred examples of the $C_{1-4}$ hydrocarbon group include alkyl groups such as a methyl group, an ethyl group, a propyl group, a butyl group, and a t-butyl group. Examples of the $C_{1-4}$ alkoxy group include a methoxy group, an ethoxy group, a propyloxy group, and a butoxy group. Among them, $R^1$ being a hydrogen atom provides low melt viscosity, excellent handling properties, and an excellent balance between bending properties and heat resistance, which is a preferred mode.

In General Formula (A) above, m represents an integer of 0 to 2 and is preferably an integer of 0 or 1 from the viewpoint of reactivity when used as a raw material and the bending properties of the cured product.

In General Formula (B) above, $R^2$ are each independently preferably a hydrogen atom or a methyl group and, from the viewpoint of the heat resistance and bending properties of the cured product, more preferably a hydrogen atom. $R^2$ being a hydrogen atom or the like provides a good balance between the heat resistance and bending properties of

the cured product, which is preferred, and in particular, $R^2$ being a hydrogen atom improves bending properties, which is a preferred mode.

In General Formula (B) above, n represents an integer of 0 to 4 and, from the viewpoint of reactivity when used as a raw material and the bending properties of the cured product, is preferably an integer of 0 or 1.

In General Formula (1) above, p represents an integer of 0 to 50 and, from the viewpoint of improving the bending properties of the cured product, is preferably an integer of 0 to 20. Note that when p is 0, the phenolic resin has a dimeric structure.

The details of $R^1$, $R^2$, m, and n in General Formula (1) above are the same as those in General Formulae (A) and (B) above.

As to the reaction ratio between the catechol compound and the ortho-xylylene skeleton-containing compound, the ortho-xylylene skeleton-containing compound is in a range of preferably 0.01 to 0.7 mol and more preferably 0.05 to 0.5 mol with respect to 1 mol of the catechol compound since an epoxy resin having an excellent balance between melt viscosity and the heat resistance of the cured product is obtained.

The reaction between the catechol compound and the ortho-xylylene skeleton-containing compound is preferably carried out in the presence of an acid catalyst since the reaction proceeds efficiently, but when ortho-xylylene dichloride or the like is used as the ortho-xylylene skeleton-containing compound, the reaction proceeds sufficiently even without any acid catalyst, and thus no catalyst may be used in such a case. Examples of the acid catalyst include inorganic acids such as hydrochloric acid, sulfuric acid, and phosphoric acid; organic acids such as methanesulfonic acid, para-toluenesulfonic acid, and oxalic acid; and Lewis acids such as boron trifluoride, anhydrous aluminum chloride, and zinc chloride. The use amount of the acid catalyst is preferably in a range of 0.01 to 5% by mass with respect to the total mass of the reaction raw materials.

The reaction between the catechol compound and the ortho-xylylene skeleton-containing compound (in this case, a chlorinated ortho-xylylene skeleton-containing compound is used) is usually carried out under a temperature condition of 50 to 180°C. In this process, a hydrogen chloride gas that is generated is desirably quickly discharged to the outside of the system and neutralized to be made harmless with alkaline water or the like. The reaction time is until substantially no hydrogen chloride gas is generated, the ortho-xylylene skeleton-containing compound as a raw material disappears, and the chlorine content derived from the ortho-xylylene skeleton-containing compound is no longer detectable and is generally about 1 to 50 hours, which depends on the reaction temperature. The reaction may be carried out in an organic solvent as needed. The organic solvent used in this process is not limited to a particular organic solvent so long as it is an organic solvent that can be used under the temperature condition described above, and specific examples thereof include methanol, ethanol, isopropanol (2-propanol), n-butanol, methyl cellosolve, ethyl cellosolve, butyl cellosolve, 1-methoxy-2-propanol, diglyme, diethylene glycol, diethylene glycol monomethyl ether, diethylene glycol monoethyl ether, toluene, xylene, and methyl isobutyl ketone. When these organic solvents are used, they are preferably used in a range of 5 to 500% by mass with respect to the total mass of the reaction raw materials.

After completion of the reaction between the catechol compound and the ortho-xylylene skeleton-containing compound, unreacted reaction raw materials, solvents, and the like are distilled off to obtain the phenolic resin.

If part of the catechol compound remains unreacted after completion of the reaction between the catechol compound and the ortho-xylylene skeleton-containing compound, the remaining catechol compound may volatilize during the production of the cured product, causing voids or adversely affecting the bending properties of the resultant epoxy resin, and thus a large remaining amount of the catechol compound is undesirable. Thus, the content of the remaining (unreacted) catechol compound calculated by GPC measurement is preferably 2 area% or less and more preferably 1 area% or less in terms of GPC area%. The GPC area% here refers to a value obtained by dividing the GPC peak area value of the remaining (unreacted) catechol compound by the total of GPC peak area values of all components.

The hydroxy group equivalent of the phenolic resin is preferably 70 to 110 g/equivalent, more preferably 75 to 100 g/equivalent, and even more preferably 80 to 95 g/equivalent. When the hydroxy group equivalent is within the above range, the heat resistance and the mechanical strength of the resultant cured product are well-balanced, which is preferred. The hydroxy group equivalent of the phenolic resin here is based on the method of measurement of "Hydroxy Group Equivalent of Phenolic Resin" in the following examples.

The melt viscosity (150°C) of the phenolic resin is preferably 5.0 dPa·s or less, more preferably 0.1 to 4.0 dPa·s, and even more preferably 0.5 to 3.0 dPa·s. When the melt viscosity of the phenolic resin is within the above range, because of low viscosity and excellent flowability and handling properties, the epoxy resin synthesized with the phenolic resin as a raw material has low viscosity and has excellent handling properties and the like when producing the cured product, which is preferred. The melt viscosity (150°C) here is measured in accordance with ASTM D4287 and with an ICI viscometer.

The softening point of the phenolic resin is preferably 50 to 110°C and more preferably 60 to 100°C. When the softening point of the phenolic resin is within the above range, it has excellent handling properties and storage stability, which is preferred. The softening point here is measured based on JIS K7234 (the ring and ball method).

<Epoxy Resin>

The present invention relates to an epoxy resin being a reaction product having a glycidyl ether group resulting from a reaction of a phenolic hydroxy group of the phenolic resin and epihalohydrin and is represented by General Formula (2) below.

[Chem. 8]

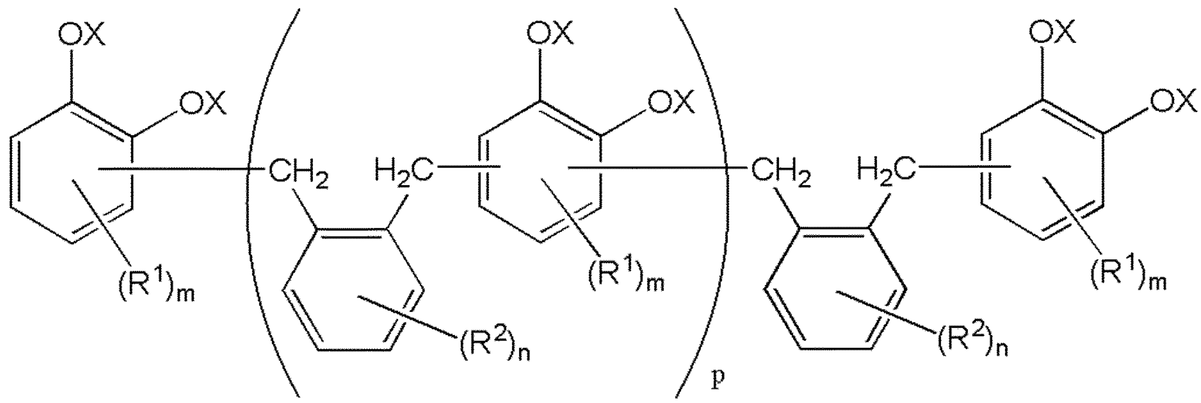

・・・(2)

[Chem. 9]

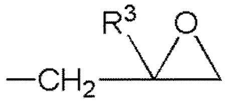

・・・(3)

The details of $R^1$, $R^2$, m, n, and p in General Formula (2) above are the same as those in General Formula (1) above.

$R^3$ in General Formula (3) above is represented by preferably a hydrogen atom or a methyl group and more preferably a hydrogen atom. Being a hydrogen atom or the like makes a curing reaction with a curing agent smooth, which is useful.

The epoxy resin is an epoxy resin in which a glycidyl ether group is introduced by reacting a phenolic hydroxy group in the phenolic resin and epihalohydrin. The cured product using the epoxy resin has excellent high heat resistance and high bending properties (bending strength, bending elastic modulus, and the like), which is preferred.

The "epoxy resin" refers to a resin containing a compound containing at least the glycidyl ether group.

The objective epoxy resin can be obtained by reacting the phenolic resin and the epihalohydrin. Examples of the reaction include a method of, using epihalohydrin in a range of 2 to 10 mol with respect to 1 equivalent of the phenolic hydroxy group in the phenolic resin, reacting them at a temperature of 20 to 120°C for 0.5 to 10 hours while adding 0.9 to 2.0 mol of a basic catalyst with respect to 1 equivalent of the phenolic hydroxy group in a batch or in batches.

In the case of performing industrial production, in the production of the epoxy resin, only a virgin epihalohydrin is used to be charged in the first batch, but, in the subsequent batches, it is preferred that epihalohydrin recovered from the crude reaction product and a virgin epihalohydrin corresponding to that consumed by the reaction and that disappearing be used in combination. With respect to the epihalohydrin used in this instance, there is no particular limitation, but examples include epichlorohydrin, epibromohydrin, and β-methylepichlorohydrin. Of these, in view of easy industrial availability, epichlorohydrin is preferred.

Specific examples of the basic catalyst include alkaline earth metal hydroxides, alkali metal carbonates, and alkali metal hydroxides. Among them, from the viewpoint of excellent catalytic activity, alkali metal hydroxides are preferred, and specifically, sodium hydroxide, potassium hydroxide, and the like are preferred.

After completion of the reaction, the reaction mixture is washed with water, and then subjected to distillation while heating under a reduced pressure to distill off unreacted epihalohydrin and the organic solvent. Further, for obtaining

an epoxy resin having further reduced a hydrolytic halogen, the obtained epoxy resin can be further subjected to reaction in such a way that the epoxy resin is further dissolved in an organic solvent, and an aqueous solution of an alkali metal hydroxide, such as sodium hydroxide or potassium hydroxide, is added to the resultant solution. In this process, for the purpose of improving the reaction rate, a phase transfer catalyst such as a quaternary ammonium salt or a crown ether may be present. When a phase transfer catalyst is used, its use amount is preferably in a ratio of 0.1 to 3.0 parts by mass with respect to 100 parts by mass of the epoxy resin. After completion of the reaction, the formed salt is removed by filtration, washing with water, and the like, and the organic solvent is distilled off by heating under a reduced pressure, so that the objective epoxy resin of the present invention can be obtained.

The epoxy equivalent of the epoxy resin is preferably 130 to 250 g/equivalent, more preferably 135 to 220 g/equivalent, and even more preferably 140 to 200 g/equivalent. When the epoxy equivalent of the epoxy resin is within the above range, the crosslinking density of the cured product is increased and the resultant cured product has excellent heat resistance, which is preferred. The measurement of the epoxy equivalent here is measured based on JIS K7236.

The melt viscosity (150°C) of the epoxy resin is preferably 2.0 dPa·s or less, more preferably 1.0 dPa·s or less, and even more preferably 0.8 dPa·s or less. When the melt viscosity of the epoxy resin is within the above range, it has low viscosity and has excellent flowability and handling properties, and thus the resultant cured product also has excellent moldability, which is preferred. The melt viscosity (150°C) here is measured in accordance with ASTM D4287 and with an ICI viscometer.

<Curable Resin Composition>

The present invention relates to a curable resin composition containing the epoxy resin. The curable resin composition containing the epoxy resin has low viscosity and has excellent handling properties, and the resultant cured product has high heat resistance and high bending properties (bending strength, bending elastic modulus, and the like), which is useful.

The curable resin composition of the present invention may further contain other resins (including other epoxy resins), curing agents, additives, solvents, and the like other than the epoxy resin to the extent that the effects of the present invention are not impaired.

[Other Epoxy Resins]

As the other epoxy resins, various epoxy resins can be used. Examples thereof include naphthalene skeleton-containing epoxy resins such as 2,7-diglycidyloxynaphthalene, α-naphthol novolac type epoxy resins, β-naphthol novolac type epoxy resins, polyglycidyl ether of α-naphthol/β-naphthol copolycondensed type novolac, naphthol aralkyl type epoxy resins, and 1,1-bis(2,7-diglycidyloxy-1-naphthyl)alkanes; bisphenol type epoxy resins such as bisphenol A type epoxy resins and bisphenol F type epoxy resins; biphenyl type epoxy resins such as biphenyl type epoxy resins and tetramethylbiphenyl type epoxy resins; novolac type epoxy resins such as phenol novolac type epoxy resins, cresol novolac type epoxy resins, bisphenol A novolac type epoxy resins, and biphenyl novolac type epoxy resins; tetraphenylethane type epoxy resins; dicyclopentadiene-phenol addition reaction type epoxy resins; phenol-aralkyl type epoxy resins; and phosphorus atom-containing epoxy resins. Examples of the phosphorus atom-containing epoxy resins include epoxides of 9,10-dihydro-9-oxa-10-phosphaphenanthrene-10-oxide (hereinafter abbreviated as "HCA"), epoxides of phenolic resins obtained by reacting HCA and quinones, epoxy resins obtained by modifying phenol novolac type epoxy resins with HCA, epoxy resins obtained by modifying cresol novolac type epoxy resins with HCA, and epoxy resins obtained by modifying bisphenol A type epoxy resins with phenolic resins obtained by reacting HCA and quinones. These epoxy resins may each be used alone, or two or more may be used in combination.

[Other Resins]

The curable resin composition of the present invention may contain other resins in addition to the epoxy resin and the other epoxy resins. In the present specification, the "other resins" means resins other than the epoxy resin.

Specific examples of the other resins include, but are not limited to, activated esters, maleimide resins, bismaleimide resins, polymaleimide resins, polyphenylene ether resins, polyimide resins, cyanate ester resins, benzoxazine resins, triazine-containing cresol novolac resins, cyanate resins, styrene-maleic anhydride resins, allyl group-containing resins such as diallylbisphenol and triallyl isocyanurate, polyphosphates, and poly(phosphate-co-carbonate). These other resins may be used alone, or two or more may be used in combination.

[Curing Agent]

The epoxy resin composition of the present invention can contain a curing agent together with the epoxy resin.

Containing the curing agent can produce a cured product having excellent heat resistance.

Examples of the curing agent used here include amine compounds, amide compounds, acid anhydrides, and phenolic resins. These may each be used alone, or two or more may be used in combination. For the phenolic resin as the curing agent, the phenolic resin represented by General Formula (1) above can also be used.

Examples of the amine compounds include diaminodiphenylmethane, diethylenetriamine, triethylenetetramine, diaminodiphenylsulfone, isophoronediamine, imidazole, $BF_3$-amine complexes, and guanidine derivatives.

Examples of the amide-based compounds include dicyandiamide and polyamide resins synthesized from carboxylic acid compounds of aliphatic dibasic acids, dimeric acids, and fatty acids and amines such as ethylenediamine.

Examples of the acid anhydrides include phthalic anhydride, trimellitic anhydride, pyromellitic anhydride, maleic anhydride, tetrahydrophthalic anhydride, methyltetrahydrophthalic anhydride, methyl nadic anhydride, hexahydrophthalic anhydride, and methylhexahydrophthalic anhydride.

Examples of the phenolic resins include polyhydric phenol compounds such as phenol novolac resins, cresol novolac resins, aromatic hydrocarbon formaldehyde resin-modified phenolic resins, dicyclopentadiene phenol-added resins, phenol aralkyl resins (zylock resin), polyhydric phenol novolac resins synthesized from a polyhydric hydroxy compound and formaldehyde represented by resorcin novolac resins, naphthol aralkyl resins, trimethylolmethane resins, tetraphenylolethane resins, naphthol novolak resins, naphthol-phenol copolycondensed novolak resins, naphthol-cresol copolycondensed novolak resins, biphenyl-modified phenolic resins (a polyhydric phenol compound with a phenolic nucleus linked with a biphenyl skeleton through a bismethylene group), biphenyl-modified naphthol resins (a polyhydric naphthol compound with a phenolic nucleus linked with a biphenyl skeleton through a bismethylene group), aminotriazine-modified phenolic resins (a polyhydric phenol compound with phenolic nuclei linked through melamine, benzoguanamine, or the like), and alkoxy group-containing aromatic ring-modified novolak resins (a polyhydric phenol compound in which a phenolic nucleus and an alkoxy group-containing aromatic ring are linked through formaldehyde).

These curing agents may each be used alone, or two or more may be used in combination.

With respect to the blending ratio between the epoxy resin component and the curing agent in the curable resin composition of the present invention, in view of obtaining a cured product having excellent curing properties and having excellent heat resistance and toughness, the epoxy resin component and the curing agent are preferably incorporated in such amounts that the amount of the active group in the curing agent is 0.7 to 1.5 equivalent relative to 1 equivalent of the total of the epoxy group (an epoxy equivalent) in the epoxy resin component.

Examples of the additives include various type of additives such as curing accelerators, flame retardants, inorganic fillers, silane coupling agents, mold release agents, pigments, emulsifiers, and solvents, and they can be contained in the resin composition with the above configuration as needed.

[Curing Accelerator]

Examples of the curing accelerators include phosphorus compounds, tertiary amines, imidazoles, organic acid metal salts, Lewis acids, and amine complex salts. Among them, from the viewpoint of excellent curing properties, heat resistance, electric properties, moisture resistance reliability, and the like, 2-ethyl-4-methyl-imidazole is preferred as an imidazole compound, triphenylphosphine is preferred as a phosphorus compound, and 1,8-diazabicyclo-[5.4.0]-undecene (DBU) is preferred as a tertiary amine.

[Flame Retardant]

Examples of the flame retardants include inorganic phosphorus compounds such as red phosphorus, ammonium phosphates such as monoammonium phosphate, diammonium phosphate, triammonium phosphate, and ammonium polyphosphate, and amide phosphate; organic phosphorus compounds such as phosphate ester compounds, phosphonic acid compounds, phosphinic acid compounds, phosphine oxide compounds, phosphorane compounds, organic nitrogen-containing phosphorus compounds, cyclic organic phosphorus compounds such as 9,10-dihydro-9-oxa-10-phosphaphenanthrene-10-oxide, 10-(2,5-dihydrooxyphenyl)-10H-9-oxa-10-phosphaphenanthrene-10-oxide, and 10-(2,7-dihydroxynaphthyl)-10H-9-oxa-10-phosphaphenanthrene-10-oxide, and derivatives obtained by reacting them with compounds such as an epoxy resin or a phenolic resin; nitrogen-based flame retardants such as triazine compounds, cyanuric acid compounds, isocyanuric acid compounds, and phenothiazine; silicone-based flame retardants such as silicone oils, silicone rubbers, and silicone resins; and inorganic flame retardants such as metal hydroxides, metal oxides, metal carbonate compounds, metal powders, boron compounds, and low-melting point glasses. When these flame retardants are used, they are preferably in a range of 0.1 to 20% by mass in the curable resin composition.

[Inorganic Filler]

The inorganic fillers are blended, for example, when the curable resin composition of the present invention is

used for semiconductor encapsulation material applications. Examples of the inorganic fillers include fused silica, crystalline silica, alumina, silicon nitride, and aluminum hydroxide. Among these, fused silica is preferred because it allows more inorganic fillers to be blended. For the fused silica, although both crushed one and spherical one can be used, it is preferable to use mainly the spherical one in order to increase the blending amount of the fused silica and to control an increase in the melt viscosity of the curable resin composition. To further increase the blending amount of the spherical silica, the particle size distribution of the spherical silica is preferably appropriately adjusted. Its filling ratio is preferably blended in a range of 0.5 to 95 parts by mass in 100 parts by mass of the curable resin composition.

The curable resin composition of the present invention may be prepared without any solvent or may contain a solvent. The solvent has the function of adjusting the viscosity of the curable resin composition and the like. Specific examples of the solvent include, but are not limited to, ketone-based solvents such as acetone, methyl ethyl ketone, methyl isobutyl ketone, and cyclohexanone, ether-based solvents such as diethyl ether and tetrahydrofuran; ester-based solvents such as ethyl acetate, butyl acetate, cellosolve acetate, propylene glycol monomethyl ether acetate, and carbitol acetate; carbitols such as cellosolve and butyl carbitol; aromatic hydrocarbons such as toluene, xylene, ethylbenzene, mesitylene, 1,2,3-trimethylbenzene, and 1,2,4-trimethylbenzene; and amide-based solvents such as dimethylformamide, dimethylacetamide, and N-methylpyrrolidone. These solvents may be used alone, or two or more may be used in combination.

In addition, when the curable resin composition of the present invention is used for uses such as conductive pastes, conductive fillers such as silver powder and copper powder can be used.

<Cured Product>

The present invention relates to a cured product obtained by subjecting the curable resin composition to a curing reaction. The cured product is obtained by the curable resin composition containing the epoxy resin and can thus exhibit high heat resistance and high bending properties (bending strength, bending elastic modulus, and the like), which is preferred.

The curable resin composition of the present invention is obtained by uniformly mixing together the above components. The epoxy resin component, the curing agent, and the curing accelerator or the like as needed are blended, and using this, the cured product can be easily obtained by the same method as conventionally known methods. Examples of the obtained cured product include molded cured products such as laminates, cast products, adhesive layers, coatings, and films.

In the method for obtaining a cured product by subjecting the curable resin composition to a curing reaction, for example, the heating temperature when performing heat curing, which is not particularly limited, is 100 to 300°C, and the heating time is preferably 1 to 24 hours.

<Applications of Curable Resin Composition>

Examples of applications in which the curable resin composition is used include printed wiring board materials, resin compositions for flexible wiring boards, interlayer insulating materials for build-up boards, insulating materials for circuit boards such as adhesive films for build-up, resin casting materials, adhesives, semiconductor encapsulating materials, semiconductor devices, prepregs, conductive paste, build-up films, build-up boards, fiber-reinforced composite materials, and molded products made by curing the composite materials. Among these various types of applications, in the applications of printed wiring board materials, insulating materials for circuit boards, and adhesive films for build-up, it can be used as insulating materials for what is called boards for embedding electronic components, in which passive components such as capacitors and active components such as IC chips are embedded within a board. Further, among the above, taking advantage of such characteristics as excellent high heat resistance and high elastic modulus of the cured product, the curable resin composition of the present invention is preferably used in semiconductor encapsulating materials, semiconductor devices, prepregs, flexible wiring boards, circuit boards, build-up films, build-up boards, multilayer printed wiring boards, fiber-reinforced composite materials, and molded products made by curing the composite materials. The following describes methods for producing the fiber-reinforced composite materials and the like from the curable resin composition.

1. Semiconductor encapsulating material

As examples of the method for obtaining a semiconductor encapsulating material from the curable resin composition, there can be mentioned a method in which the curable resin composition, a curing accelerator, and ingredients, such as an inorganic filler, are satisfactorily melt-mixed, if necessary, using an extruder, a kneader, a roll, or the like until the resultant mixture becomes uniform. In this instance, as an inorganic filler, generally, fused silica is used, but, when the semiconductor encapsulating material is used as a high thermal-conductivity semiconductor encapsulating

material for power transistor or power IC, crystalline silica having a higher thermal conductivity than that of fused silica, a high filling filler, such as alumina or silicon nitride, or fused silica, crystalline silica, alumina, silicon nitride, or the like may be used. As its filling ratio, the inorganic filler is preferably used in a range of 30 to 95 parts by mass with respect to 100 parts by mass of the curable resin composition. In particular, to improve flame retardancy, moisture resistance, and solder cracking resistance and to lower the coefficient of linear expansion, it is more preferably 70 parts by mass or more and even more preferably 80 parts by mass or more.

2. Semiconductor device

As examples of the method for obtaining a semiconductor device from the curable resin composition, there can be mentioned a method in which the above-mentioned semiconductor encapsulating material is cast, or molded using a transfer molding machine, an injection molding machine, or the like, and further heated at 50 to 200°C for 2 to 10 hours.

3. Prepreg

As examples of the method for obtaining a prepreg from the curable resin composition, there can be mentioned a method in which it is obtained by impregnating the curable resin composition made into a varnish by blending any of the following organic solvents into a reinforcing base material (paper, glass cloth, glass nonwoven cloth, aramid paper, aramid cloth, glass mat, glass roving cloth, or the like) and then heating it at a heating temperature corresponding to the solvent type used, which is preferably 50 to 170°C. With respect to the mass ratio of the resin composition and the reinforcing base material used in the prepreg, there is no particular limitation, but, generally, it is preferred that the prepreg be prepared so that the resin content of the prepreg is 20 to 60% by mass.

Examples of the organic solvents used here include methyl ethyl ketone, acetone, dimethyl formamide, methyl isobutyl ketone, methoxypropanol, cyclohexanone, methyl cellosolve, ethyl diglycol acetate, and propylene glycol monomethyl ether acetate, and their selection and appropriate use amount can be selected as appropriate depending on the use. For example, when further producing printed circuit boards from the prepreg as described below, it is preferable to use a polar solvent having a boiling point of 160°C or lower such as methyl ethyl ketone, acetone, or dimethyl formamide, and it is preferably used in a ratio with a nonvolatile content of 40 to 80% by mass.

4. Circuit Board

As a method for obtaining a printed circuit board from the curable resin composition, there can be mentioned a method in which the above-mentioned prepreg is laminated by a general method, and a copper foil is appropriately stacked thereon, and the resultant laminate is heat-pressed under a pressure of 1 to 10 MPa at 170 to 300°C for 10 minutes to 3 hours.

5. Flexible Wiring Board

Examples of the method for producing a flexible wiring board from the curable resin composition include one produced by a method including the following three steps. The first step is a step of applying the curable resin composition, blended with an active ester, an epoxy resin, and an organic solvent, to an electric insulating film using a coating machine such as a reverse roll coater or a comma coater. The second step is a step of heating the electric insulating film coated with the curable resin composition at 60 to 170°C for 1 to 15 minutes using a heating machine to volatilize the solvent from the electric insulating film so as to B-stage the curable resin composition. The third step is a step of heat-pressing a metal foil with an adhesive to the electric insulating film in which the curable resin composition has been B-staged using a heating roll or the like (the pressing pressure is preferably 2 to 200 N/cm and the pressing temperature is preferably 40 to 200°C). If sufficient adhesive performance can be obtained through the above three steps, the process may be terminated here. However, if complete adhesive performance is required, further performing post-curing under conditions of 100 to 200°C and 1 to 24 hours is preferred. The thickness of the curable resin composition film after final curing is preferably in a range of 5 to 100 μm.

6. Build-up Board

Examples of the method for producing a build-up board from the curable resin composition include one produced by a method including the following three steps. The first step is a step of applying the curable resin composition, blended with rubbers, fillers, and the like as appropriate, to a circuit board on which a circuit is formed using spray coating, curtain coating, or the like and then curing it. The second step is a step of then forming holes in a specified through hole portion or the like as needed, then treating it with a roughening agent, washing its surface with hot water to form irregularities,

and performing plating treatment with a metal such as copper. The third step is a step of repeating these operations in sequence as desired to form a resin insulation layer and a conductor layer of a certain circuit pattern by alternately building-up them. The formation of the through hole portion is preferably performed after the resin insulating layer as the outermost layer is formed. The first step can also be performed by laminating a build-up film that has been previously coated to a desired thickness and dried, apart from the method of solution coating described above. With respect to the build-up board in the invention, when a copper foil with a resin obtained by semi-curing the resin composition on a copper foil is heat-pressed at 170 to 250°C onto a wiring board having a circuit formed thereon, the build-up board can be produced without the step for forming a roughened surface and plating treatment.

7. Build-up film

As a method for producing a buildup film from the curable resin composition, there can be mentioned a method in which it is produced by applying the curable resin composition onto a support film to form a curable resin composition layer so as to make an adhesive film for a multilayer printed wiring board.

When the build-up film is produced from the curable resin composition, it is important that the film is softened under a temperature condition of lamination in vacuum lamination (usually 70 to 140°C) and to exhibit flowability (resin flow) enabling resin filling in via holes or through holes present in the circuit board at the same time as the lamination of the circuit board, and it is preferable to blend the above components so as to exhibit such characteristics.

Here, the diameter and the depth of the through holes in the multilayer printed wiring board are usually 0.1 to 0.5 mm and 0.1 to 1.2 mm, respectively, and it is usually preferable to enable resin filling within these ranges. When laminating both sides of the circuit board, it is desirable to fill about 1/2 of the through holes.

As the method for producing the adhesive film, specifically, it can be produced by preparing the varnish-like curable resin composition, then applying this varnish-like composition to the surface of a support film (Y), and further drying an organic solvent by heating, hot-air blowing, or the like to form a composition layer (X) containing the curable resin composition.

The thickness of the formed composition layer (X) is generally preferably the thickness of the conductor layer or more. The conductor layer in the circuit board generally has a thickness in a range of from 5 to 70 um, and therefore the resin composition layer preferably has a thickness of 10 to 100 μm.

The composition layer (X) in the present invention may be protected by the below-mentioned protective film. Protection by the protective film can prevent dust and the like from adhering to the surface of the resin composition layer or scratches thereon.

As examples of the above-mentioned support film and protective film, there can be mentioned polyolefins, such as polyethylene, polypropylene, and polyvinyl chloride, polyesters, such as polyethylene terephthalate (hereinafter, frequently referred to simply as "PET") and polyethylene naphthalate, polycarbonate, polyimide, and further release paper and metal foils, such as a copper foil and an aluminum foil. The support film and the protective film may be treated with mold release treatment in addition to mad treatment and corona treatment.

The thickness of the support film, which is not limited to a particular thickness, is usually 10 to 150 um and is preferably used in a range of 25 to 50 um. The thickness of the protective film is preferably 1 to 40 μm.

The above-mentioned support film (Y) is peeled off after being laminated onto the circuit board or after forming an insulating layer by heat curing. If the support film (Y) is peeled off after the adhesive layer is heat cured, adhesion of dust and the like during the curing step can be prevented. When the support film is released after curing the resin composition, generally, the support film is preliminarily subjected to release treatment.

8. Multilayer Printed Wiring Board

Using the film obtained as mentioned above, a multilayer printed wiring board can be produced. As the method for producing such a multilayer printed wiring board, for example, when the composition layer (X) is protected by a protective film, these are released, and then the composition layer (X) is directly laminated to one or both sides of the circuit board by vacuum lamination, for example. The method of lamination may be a batch type or a continuous type with rolls. The adhesive film and the circuit board may be heated (preheated) as required before performing lamination.

As the conditions for lamination, the compression bonding temperature (lamination temperature) is preferably 70 to 140°C, the compression bonding pressure is preferably 1 to 11 kgf/cm$^2$ ($9.8 \times 10^4$ to $107.9 \times 10^4$ N/m$^2$) , and the lamination is preferably performed under an air pressure of 20 mmHg (26.7 hPa) or less, which is a reduced pressure.

9. Fiber-Reinforced Composite Material

The present invention relates to a fiber-reinforced composite material containing the curable resin composition and reinforcing fibers. As a method for producing the fiber-reinforced composite material from the curable resin composition, it can be produced by uniformly mixing together the components forming the curable resin composition to prepare a varnish, then impregnating this into a reinforced base material formed of reinforcing fibers, and then performing a polymerization reaction. In particular, the epoxy resin of the present invention has low melt viscosity, thus has excellent handling properties, and is thus suitable for the production of the fiber-reinforced composite material, which is preferred.

The curing temperature when performing such a polymerization reaction is specifically preferably in a temperature range of 50 to 250°C. In particular, it is preferable to perform curing at 50 to 100°C to make a tack-free cured product and then further treat it at a temperature condition of 120 to 200°C.

The reinforcing fibers may be any of the twisted yarn, untwisted yarn, or non-twisted yarn, but untwisted yarn and non-twisted yarn are preferred because they provide both the moldability and mechanical strength of fiber-reinforced plastic members. Further, as the form of the reinforcing fibers, fibers with the fiber direction aligned in one direction or woven fabrics can be used. A woven fabric can be freely selected from plain weave, satin weave, and the like in accordance with the site to be used and the use. Specific examples include carbon fibers, glass fibers, aramid fibers, boron fibers, alumina fibers, and silicon carbide fibers because of their excellent mechanical strength and durability, and two or more of these can also be used in combination. Among these, carbon fibers are particularly preferred because they provide good strength to molded products. As the carbon fibers, various types of carbon fibers such as polyacrylonitrile-based, pitch-based, and rayon-based ones can be used. Among them, polyacrylonitrile-based ones are preferred, which can easily produce high-strength carbon fibers. The use amount of the reinforcing fibers when the varnish is impregnated into the reinforced base material formed of the reinforcing fibers to make the fiber-reinforced composite material is preferably an amount making the volume content of the reinforcing fibers in the fiber-reinforced composite material in a range of 40 to 85%.

10. Fiber-Reinforced Resin Molded Product

The present invention relates to a fiber-reinforced resin molded product containing the cured product and reinforcing fibers. Examples of the method for producing a fiber-reinforced resin molded product from the curable resin composition include the hand layup method and the spray up method in which a fiber aggregate is laid on a mold, and multiple layers of the varnish are laminated on each other, the vacuum bag method in which using either a male mold or a female mold, base materials formed of reinforcing fibers are laminated on each other to be molded while being impregnated with a varnish, and a flexible mold that can apply pressure to a molded product is covered, which is hermetically sealed and vacuum (reduced-pressure) molded, the SMC press method in which a varnish containing reinforcing fibers made into a sheet shape in advance is compression-molded with a mold, and a method in which a prepreg in which reinforcing fibers are impregnated with the varnish is produced by the RTM method in which the varnish is injected into a combination mold fully covered with fibers or the like, and the prepreg is baked and hardened with a large-sized autoclave. In particular, the epoxy resin of the present invention has low melt viscosity, thus has excellent handling properties, and is thus suitable for the production of the fiber-reinforced resin molded product, which is preferred. The fiber-reinforced resin molded product obtained above is a molded product having the reinforcing fibers and the cured product of the curable resin composition. Specifically, the amount of the reinforcing fibers in the fiber-reinforced resin molded product is preferably in a range of 40 to 70% by mass and, in view of strength, particularly preferably in a range of 50 to 70% by mass.

11. Others

While the methods for producing the semiconductor encapsulating material, the fiber-reinforced composite material, and the like have been described above, other cured products can also be produced from the curable resin composition. As the method for producing the other cured products, they can be produced while complying with a general method for curing a curable resin composition. For example, the heating temperature condition may be selected as appropriate in accordance with the type of the curing agent to be combined, the use, and the like.

[Examples]

The following describes the present invention specifically with reference to examples and comparative examples, but the present invention is not interpreted as these in a limited manner. In the following, unless otherwise noted, the data are on a mass basis. The phenolic resins and the epoxy resins obtained below and the cured products obtained using the epoxy resins were measured and evaluated under the following conditions and the like.

<Hydroxy Group Equivalent of Phenolic Resin>

The hydroxy group equivalent (g/equivalent) of the phenolic resin was measured using the following procedure

and formula.

In a 500 mL Erlenmeyer flask, 2.5 g of the phenolic resin obtained below as a sample, 7.5 g of triphenylphosphine, 7.5 g of pyridine, and 2.5 g of acetic anhydride were accurately weighed and were processed at 120°C for 2.5 hours, and 5 mL of distilled water was added to stop the reaction. Subsequently, the reaction product was dissolved in 150 mL of tetrahydrofuran and 200 mL of propylene glycol monomethyl ether to prepare a sample solution.

Apart from the above sample solution, 10 mL of distilled water and 2.5 g of acetic anhydride were accurately weighed, 10 g of pyridine was put thereinto, and the mixture was stirred for 10 minutes, was left at rest for 20 minutes, and was then mixed with 150 mL of tetrahydrofuran and 200 mL of propylene glycol monomethyl ether to prepare a blank solution.

The obtained sample solution and blank solution were titrated using a 0.5 mol/L ethanolic potassium hydroxide solution (titrant) using a potentiometric auto titrator AT-510 (manufactured by Kyoto Electronics Manufacturing Co., Ltd.), and the hydroxy group equivalent was calculated using the following expression.

[Blank Expression]

BL = (titration amount of blank solution) × (theoretical titration volume of 2.5 g of acetic anhydride)/(theoretical titration amount of blank solution) = Y × [(2.5/102.09) × 2 × (1,000/5)]/[(W/102.09) × 2 × (1,000/5)]

BL: Blank value (mL)
Y: Titration amount of blank solution (mL)
W: Amount of acetic anhydride in blank measurement (g)

[Expression for Calculating Hydroxy Group Equivalent of Sample]

Hydroxyl group equivalent (g/equivalent) = S × 1,000/[{(BL × FA3/FA5) - EP1} × FA4]

S: Sample amount (g)
FA3: Amount of acetic anhydride at sample measurement (g)
FA4: Concentration of titrant (ethanolic KOH solution) (mol/L)
FA5: Amount of acetic anhydride at sample measurement (g)
EP1: Titration amount of sample (mL)

<Softening Point of Phenolic Resin>

The softening point (°C) of the phenolic resins obtained below was measured in accordance with JIS K 7234 (the ring and ball method).

<Melt Viscosity Measurement (150°C)>

Melt viscosity (dPa·s) at 150°C was measured in accordance with ASTM D4287 and with an ICI viscometer.

<Viscosity Measurement (25°C)>

Viscosity (mPa·s) at 25°C was measured using an E-type viscometer (TV-22 manufactured by Toki Sangyo Co., Ltd.).

<Epoxy Equivalent of Epoxy Resin>

The epoxy equivalent (g/equivalent) of the epoxy resins obtained below was measured in accordance with JIS K 7236.

<GPC Measurement>

GPC measurement of the phenolic resins obtained by the synthesis method described below and the epoxy resins obtained by using the phenolic resins was performed using the following measurement apparatuses and measurement conditions. The results of the GPC measurement (GPC charts) are illustrated only for Examples 1 to 4.

Measurement apparatus: "HLC-8320 GPC" manufactured by Tosoh Corporation
Column: Guard column "HXL-L" manufactured by Tosoh Corporation

+ "TSK-GEL G2000HXL" manufactured by Tosoh Corporation
+ "TSK-GEL G2000HXL" manufactured by Tosoh Corporation
+ "TSK-GEL G3000HXL" manufactured by Tosoh Corporation
+ "TSK-GEL G4000HXL" manufactured by Tosoh Corporation

Detector: RI (differential refractometer)
Data processing: "GPC Workstation EcoSEC-WorkStation" manufactured by Tosoh Corporation
Measurement conditions: Column temperature of 40°C

Developing solvent: tetrahydrofuran
Flow rate: 1.0 ml/minute

Standard: The following monodispersed polystyrenes of known molecular weights were used in conformity with the measurement manual of the "GPC Workstation EcoSEC-WorkStation."

(Polystyrenes Used)

"A-500" manufactured by Tosoh Corporation
"A-1000" manufactured by Tosoh Corporation
"A-2500" manufactured by Tosoh Corporation
"A-5000" manufactured by Tosoh Corporation
"F-1" manufactured by Tosoh Corporation
"F-2" manufactured by Tosoh Corporation
"F-4" manufactured by Tosoh Corporation
"F-10" manufactured by Tosoh Corporation
"F-20" manufactured by Tosoh Corporation
"F-40" manufactured by Tosoh Corporation
"F-80" manufactured by Tosoh Corporation
"F-128" manufactured by Tosoh Corporation

Sample: A microfiltered tetrahydrofuran solution (50 ul) of 1.0% by mass in terms of solid content of the epoxy resin.

With respect to the content ratio (area%) of a remaining (unreacted) catechol compound in the phenolic resin, it is preferable that the content ratio of the remaining catechol compound be 2 area% or less from the viewpoint of reducing a volatile content during curing and for avoiding adverse effects on the bending properties of the resultant cured product.

<$^{13}$C-NMR Measurement>

$^{13}$C-NMR: "JNM-ECA500" manufactured by JEOL Ltd.

Magnetic field strength: 500 MHz
Accumulation times: 2000
Solvents: DMSO-d6 (the phenolic resin), chloroform-d1 (the epoxy resin)
Sample concentration: 30% by mass

From the result of the $^{13}C$-NMR chart, peaks derived from the objective compounds (the phenolic resin and the epoxy resin) were able to be determined, and it has been confirmed that the objective compounds in the respective reactions were obtained. The results of the $^{13}C$-NM measurement ($^{13}C$-NMR charts) are illustrated only for Example 2 and Example 4.

<FD-MS Spectral Measurement>

FD-MS spectra were measured using the following measurement apparatus and measurement conditions.
Measurement apparatus: JMS-T100GC AccuTOF manufactured by JEOL Ltd.

Measurement conditions

Measuring range: m/z = 4.00 to 2,000.00
Rate of change: 51.2 mA/min
Final current: 45 mA
Cathode voltage: -10 kV
Recording interval: 0.07 sec

From the result of the FD-MS spectra, peaks derived from the objective products (the phenolic resin and the epoxy resin) were able to be determined, and it has been confirmed that the objective products were obtained. The results of the FD-MS spectral measurement are illustrated only for Example 2 and Example 4.

[Example 1]

[Synthesis of Phenolic Resin (a-1)]

Charged into a 2-L flask equipped with a thermometer, a cooling pipe, and a stirrer were 550.5 g (5.00 mol) of catechol, 175.2 g (1.00 mol) of ortho-xylylene dichloride, and 87.6 g of methanol, and the temperature was raised up to 120°C while dissolving them. After holding the mixture at that temperature for 2 hours, it was reacted with the temperature raised up to 150°C and held for 3 hours while methanol was discharged to the outside of the system. In this process, the hydrogen chloride gas produced in the reaction was absorbed by a layer of an aqueous solution of sodium hydroxide placed outside the system to be neutralized. After the reaction, unreacted catechol was distilled off while blowing water vapor under a reduced pressure at 150°C to obtain 280.4 g of a phenolic resin (a-1). The phenolic resin (a-1) had a hydroxy group equivalent of 87 g/equivalent, a softening point of 76°C, and a melt viscosity at 150°C of 1.2 dPa·s. A GPC measurement result showed that the dimer had a GPC area% of 62 area% and the remaining catechol had 0.8 area%. FIG. 1 illustrates a GPC chart. With respect to the content of the dimer in the entire amount of the phenolic resin, from the viewpoint of improving handling properties when the epoxy resin obtained by using the phenolic resin is synthesized and the mechanical properties (bending properties) of the cured product, 50 area% or more is preferred, and 60 area% or more is more preferred in terms of GPC area%.

[Example 2]

[Synthesis of Phenolic Resin (a-2)]

Charged into a 2-L flask equipped with a thermometer, a cooling pipe, and a stirrer were 1,266.2 g (11.50 mol) of catechol, 201.5 g (1.15 mol) of ortho-xylylene dichloride, and 100.8 g of methanol, and the temperature was raised up to 120°C while dissolving them. After holding the mixture at that temperature for 2 hours, it was reacted with the temperature raised up to 150°C and held for 3 hours while methanol was discharged to the outside of the system. In this process, the hydrogen chloride gas produced in the reaction was absorbed by a layer of an aqueous solution of

sodium hydroxide placed outside the system to be neutralized. After the reaction, unreacted catechol was distilled off while blowing water vapor under a reduced pressure at 150°C to obtain 423.6 g of a phenolic resin (a-2). The phenolic resin (a-2) had a hydroxy group equivalent of 86 g/equivalent, a softening point of 69°C, and a melt viscosity at 150°C of 0.7 dPa·s. A GPC measurement result showed that the dimer had a GPC area% of 79 area% and the remaining catechol had 0.6 area%. FIG. 2 illustrates a GPC chart. By the measurement of an FD-MS spectrum and a 13C-NMR chart, the synthesis of the phenolic resin (a-2) was confirmed. FIG. 5 and FIG. 7 illustrate the respective measurement results.

[Example 3]

[Synthesis of Epoxy Resin (A-1)]

Charged into a 2-L flask equipped with a thermometer, a cooling pipe, and a stirrer were 174.0 g (2.0 mol as the hydroxy group) of the phenolic resin (a-1) and 740.0 g (8.0 mol) of epichlorohydrin, and the temperature was raised up to 50°C while stirring and dissolving them. Next, 1.70 g of benzyltrimethylammonium chloride was charged thereinto and was reacted for 24 hours while the temperature was kept at 50°C. Further, 179.6 g (1.10 equivalent with respect to the hydroxy group) of a 49% aqueous solution of sodium hydroxide was added dropwise thereto over 3 hours and was further reacted at 50°C for 1 hour. After completion of the reaction, 148.0 g of n-butanol was added thereto, stirring was stopped, the water layer that had accumulated in the lower layer was removed, stirring was resumed, and unreacted epichlorohydrin was distilled off under a reduced pressure at 150°C. To the resultant crude epoxy resin were added 479.4 g of methyl isobutyl ketone and 80.0 g of n-butanol, dissolving the resin. Further, to the resultant solution was added 18.3 g of a 10% aqueous solution of sodium hydroxide, and the resultant mixture was subjected to reaction at 80°C for 2 hours, and then washed with 141.0 g of water repeatedly until the pH of the washing water was neutral. Then, the inside of the reaction system was dehydrated by azeotropic distillation, and subjected to microfiltration, and then the solvent was distilled off under a reduced pressure to obtain 270.7 g of an objective epoxy resin (A-1). The obtained epoxy resin (A-1) had an epoxy equivalent of 171 g/eq and a melt viscosity at 150°C of 0.6 dPa·s. FIG. 3 illustrates a GPC chart.

[Example 4]

[Synthesis of Epoxy Resin (A-2)]

Charged into a 2-L flask equipped with a thermometer, a cooling pipe, and a stirrer were 301.0 g (3.5 mol as the hydroxy group) of the phenolic resin (a-2) and 1295.0 g (14 mol) of epichlorohydrin, and the temperature was raised up to 50°C while stirring and dissolving them. Next, 2.87 g of benzyltrimethylammonium chloride was charged thereinto and was reacted for 24 hours while the temperature was kept at 50°C. Further, 314.3 g (1.10 equivalent with respect to the hydroxy group) of a 49% aqueous solution of sodium hydroxide was added dropwise thereto over 3 hours and was further reacted at 50°C for 1 hour. After completion of the reaction, 259.0 g of n-butanol was added thereto, stirring was stopped, the water layer that had accumulated in the lower layer was removed, stirring was resumed, and unreacted epichlorohydrin was distilled off under a reduced pressure at 150°C. To the resultant crude epoxy resin were added 821.1 g of methyl isobutyl ketone and 137.1 g of n-butanol, dissolving the resin. Further, to the resultant solution was added 24.9 g of a 10% aqueous solution of sodium hydroxide, and the resultant mixture was subjected to reaction at 80°C for 2 hours, and then washed with 241.5 g of water repeatedly until the pH of the washing water was neutral. Then, the inside of the reaction system was dehydrated by azeotropic distillation, and subjected to microfiltration, and then the solvent was distilled off under a reduced pressure to obtain 477.1 g of an objective epoxy resin (A-2). The obtained epoxy resin (A-2) had an epoxy equivalent of 170 g/eq and a melt viscosity at 150°C of 0.4 dPa·s. FIG. 4 illustrates a GPC chart. By the measurement of an FD-MS spectrum and a $^{13}$C-NMR chart, the synthesis of the epoxy resin (A-2) was confirmed. FIG. 6 and FIG. 8 illustrate the respective measurement results.

[Comparative Example 1]

[Synthesis of Phenolic Resin (b-1)]

Charged into a 2-L flask equipped with a thermometer, a cooling pipe, and a stirrer were 660.6 g (6.00 mol) of catechol, 105.1 g (0.60 mol) of para-xylylene dichloride, and 52.6 g of methanol, and the temperature was raised up to 120°C while dissolving them. After holding the mixture at that temperature for 2 hours, it was reacted with the temperature raised up to 150°C and held for 3 hours while methanol was discharged to the outside of the system. In this process, the hydrogen chloride gas produced in the reaction was absorbed by a layer of an aqueous solution of sodium hydroxide

placed outside the system to be neutralized. After the reaction, unreacted catechol was distilled off while blowing water vapor under a reduced pressure at 150°C to obtain 235.4 g of a phenolic resin (b-1). The phenolic resin (b-1) had a hydroxy group equivalent of 85 g/equivalent, a softening point of 64°C, and a melt viscosity at 150°C of 1.2 dPa·s. The remaining catechol was 0.3 area% in terms of GPC area%. For the comparative example, the measurement of an FD-MS spectrum and $^{13}C$-NMR was performed to confirm the synthesis as in the examples, but are not shown. The same applies to the following comparative examples.

[Comparative Example 2]

[Synthesis of Epoxy Resin (B-1)]

Charged into a 2-L flask equipped with a thermometer, a cooling pipe, and a stirrer were 186.3 g (2.3 mol as the hydroxy group) of the phenolic resin (b-1) and 851.0 g (9.2 mol) of epichlorohydrin, and the temperature was raised up to 50°C while stirring and dissolving them. Next, 1.86 g of benzyltrimethylammonium chloride was charged thereinto and was reacted for 24 hours while the temperature was kept at 50°C. Further, 216.0 g (1.10 equivalent with respect to the hydroxy group) of a 49% aqueous solution of sodium hydroxide was added dropwise thereto over 3 hours and was further reacted at 50°C for 1 hour. After completion of the reaction, 259.0 g of n-butanol was added thereto, stirring was stopped, the water layer that had accumulated in the lower layer was removed, stirring was resumed, and unreacted epichlorohydrin was distilled off under a reduced pressure at 150°C. To the resultant crude epoxy resin were added 821.1 g of methyl isobutyl ketone and 170.4 g of n-butanol, dissolving the resin. Further, to the resultant solution was added 31.2 g of a 10% aqueous solution of sodium hydroxide, and the resultant mixture was subjected to reaction at 80°C for 2 hours, and then washed with 157.6 g of water repeatedly until the pH of the washing water was neutral. Then, the inside of the reaction system was dehydrated by azeotropic distillation, and subjected to microfiltration, and then the solvent was distilled off under a reduced pressure to obtain 299.3 g of an epoxy resin (B-1). The obtained epoxy resin (B-1) had an epoxy equivalent of 166 g/eq and a melt viscosity at 150°C of 0.4 dPa·s.

[Comparative Example 3]

[Synthesis of Epoxy Resin (B-2)]

Charged into a 2-L flask equipped with a thermometer, a cooling pipe, and a stirrer were 165.0 g (1.5 mol) of catechol and 1,110 g (12 mol) of epichlorohydrin, and the temperature was raised up to 50°C while stirring and dissolving them. Next, 11.2 g of benzyltrimethylammonium chloride was charged thereinto and was reacted for 24 hours while the temperature was kept at 50°C. Further 269.4 g (1.10 mol with respect to the hydroxy group) of a 49% aqueous solution of sodium hydroxide was added dropwise thereto over 3 hours and was further reacted at 50°C for 1 hour. After completion of the reaction, 222.0 g of n-butanol was added thereto, stirring was stopped, the water layer that had accumulated in the lower layer was removed, stirring was resumed, and unreacted epichlorohydrin was distilled off under a reduced pressure at 150°C. To the resultant crude epoxy resin were added 566.1 g of methyl isobutyl ketone and 94.5 g of n-butanol, dissolving the resin. Further, to this solution, 14.2 g of a 10% aqueous solution of sodium hydroxide was added and reacted at 80°C for 2 hours, which was then repeatedly washed with 185.0 g of water until the pH of the washing water was neutral. Then, the inside of the reaction system was dehydrated by azeotropic distillation, and subjected to microfiltration, and then the solvent was distilled off under a reduced pressure to obtain 323.0 g of an epoxy resin (B-2). The obtained epoxy resin (B-2) had an epoxy equivalent of 139 g/eq and a melt viscosity at 25°C of 190 mPa·s.

[Comparative Example 4]

[Epoxy Resin (B-3)]

A bisphenol A type liquid epoxy resin (manufactured by DIC Corporation, EPICLON 850S, epoxy equivalent: 188 g/equivalent, viscosity at 25°C: 13,000 mPa·s) was used as an epoxy resin (B-3).

[Examples 5 and 6 and Comparative Examples 5 to 7]

Each of the epoxy resins of Examples 3 and 4 and Comparative Examples 2 to 4 and 4,4'-diaminodiphenylsulfone as a curing agent were blended such that the epoxy equivalent/active hydrogen equivalent = 1/1 and were melt-mixed at 120°C to obtain an epoxy resin composition (curable resin composition). Further, the epoxy resin composition was poured into between glass plates with 2-mm and 4-mm spacers held therebetween and was subjected to a curing reaction at 150°C for 1 hour and then at 180°C for 3 hours to produce a cured product.

<Glass Transition Temperature (Tg)>

The obtained cured product having a thickness of 2 mm was cut into a size having a width of 5 mm and a length of 20 mm, and this cut piece was used as a test specimen. With respect to this test specimen, using a viscoelasticity measuring apparatus (DMA: solid viscoelasticity measuring apparatus "DMS6100", manufactured by Hitachi High-Tech Science Corporation; deformation mode: bending with both ends supported; measurement mode: sinusoidal vibration; frequency: 1 Hz; temperature elevation rate: 3°C/minute), the temperature at which an elastic modulus change was maximum (the rate of change of tanδ was maximum) was evaluated as a glass transition temperature.

The glass transition temperature (Tg) is preferably 240°C or higher and more preferably 245°C or higher. When it is within the above range, high heat resistance can be exhibited, which is useful.

<Measurement of Bending Strength, Bending Elastic Modulus, and Bending Strain>

With respect to the obtained cured product, in accordance with JIS K7171, the bending strength, bending elastic modulus, and bending strain of a 4-mm-thick cured product were measured.

The bending elastic modulus is preferably 3,200 MPa or more, more preferably 3,500 MPa or more, and even more preferably 3,700 MPa or more.

The bending strength is preferably 110 MPa or more, more preferably 125 MPa or more, and even more preferably 140 MPa or more.

The bending strain is preferably 3% or more, more preferably 4% or more, and even more preferably 5% or more.

When they are within the above ranges, high bending properties can be exhibited, which is useful.

[Table 1]

| Blended raw materials and evaluation details | Unit | Example 5 | Example 6 | Comparative Example 5 | Comparative Example 6 | Comparative Example 7 |
|---|---|---|---|---|---|---|
| Epoxy resin (A-1) | g number | 100 | | | | |
| Epoxy resin (A-2) | | | 100 | | | |
| Epoxy resin (B-1) | | | | 100 | | |
| Epoxy resin (B-2) | | | | | 100 | |
| Epoxy resin (B-3) | | | | | | 100 |
| 4,4'-Diaminodiphenylsulfone | | 36.3 | 36.5 | 37.3 | 44.6 | 33.0 |
| Glass transition temperature Tg (DMA) | °C | 269 | 247 | 236 | 137 | 217 |
| Bending elastic modulus | MPa | 4,080 | 4,200 | 3,660 | 4,550 | 3,030 |
| Bending strength | MPa | 166 | 162 | 133 | 139 | 130 |
| Bending strain | % | 6.0 | 5.5 | 4.8 | 5.7 | 11.3 |

From the evaluation results in Table 1 above, Examples 5 and 6, using the epoxy resins of Examples 3 and 4 obtained by using the desired phenolic resins of Examples 1 and 2, were able to obtain cured products having high heat resistance and high bending properties.

Comparative Example 5, on the other hand, using the epoxy resin using the phenolic resin using the compound containing a para-xylylene skeleton instead of the ortho-xylylene skeleton, showed results inferior to those of the examples in heat resistance and bending properties as a whole. Comparative Example 6, using the epoxy resin of Comparative Example 3, which did not use the ortho-xylylene skeleton-containing compound itself, showed heat resistance much inferior to that of the examples. Comparative Example 7, using the commercially available bisphenol A type liquid epoxy resin, did not satisfy heat resistance and bending properties and showed results inferior to those of the examples.

Brief Description of Drawings

FIG. 1 is a GPC chart of a phenolic resin (a-1) obtained in Example 1.
FIG. 2 is a GPC chart of a phenolic resin (a-2) obtained in Example 2.
FIG. 3 is a GPC chart of an epoxy resin (A-1) obtained in Example 3.
FIG. 4 is a GPC chart of an epoxy resin (A-2) obtained in Example 4.
FIG. 5 is an FD-MS spectral chart of the phenolic resin (a-2) obtained in Example 2.
FIG. 6 is an FD-MS spectral chart of the epoxy resin (A-2) obtained in Example 4.
FIG. 7 is a $^{13}C$-NMR chart of the phenolic resin (a-2) obtained in Example 2.
FIG. 8 is a $^{13}C$-NMR chart of the epoxy resin (A-2) obtained in Example 4.

## Claims

1. A phenolic resin being a reaction product of a catechol compound and an ortho-xylylene skeleton-containing compound,
   the phenolic resin having a catechol skeleton derived from the catechol compound and an ortho-xylylene skeleton derived from the ortho-xylylene skeleton-containing compound.

2. The phenolic resin according to claim 1, represented by General Formula (1) below:

[Chem. 1]

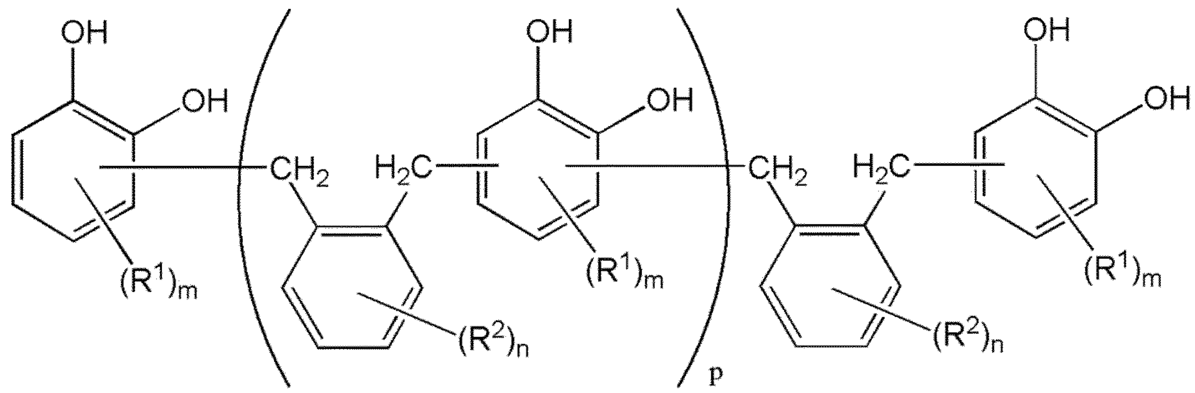

・・・(1)

(in Formula (1),

R^1 is represented by a hydrogen atom, a $C_{1-4}$ hydrocarbon group, or a $C_{1-4}$ alkoxy group;
$R^2$ is represented by a hydrogen atom or a methyl group;
m is represented by an integer of 0 to 2;
n is represented by an integer of 0 to 4; and
p is represented by an integer of 0 to 50).

3. An epoxy resin being a reaction product having a glycidyl ether group resulting from a reaction of a phenolic hydroxy group of the phenolic resin according to claim 1 or 2 and epihalohydrin.

4. The epoxy resin according to claim 3, represented by General Formula (2) below:

[Chem. 2]

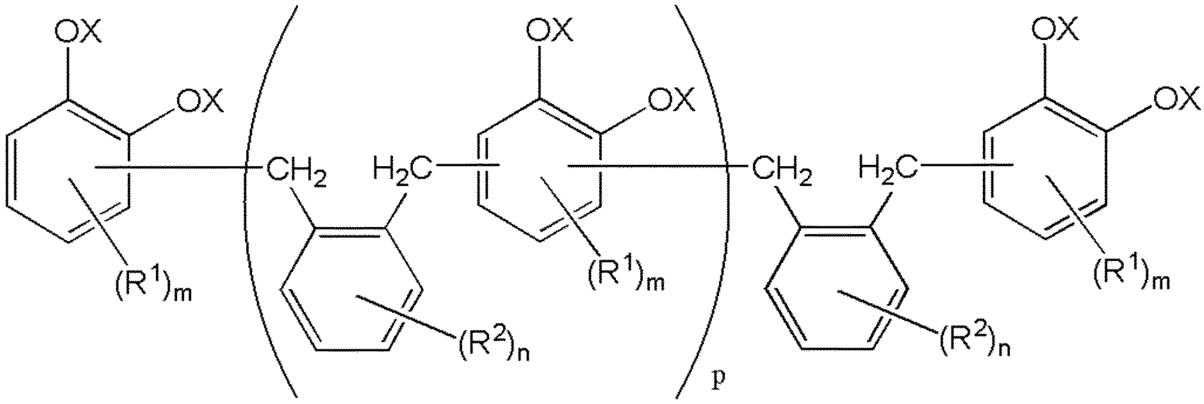

・・・(2)

[Chem. 3]

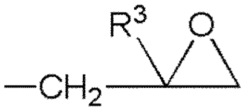

・・・(3)

(in Formula (2),

X is represented by Formula (3),
$R^1$ is represented by a hydrogen atom, a $C_{1-4}$ hydrocarbon group, or a $C_{1-4}$ alkoxy group;
$R^2$ is represented by a hydrogen atom or a methyl group;
$R^3$ is represented by a hydrogen atom or a methyl group;
m is represented by an integer of 0 to 2;
n is represented by an integer of 0 to 4; and
p is an integer of 0 to 50).

**5.** The epoxy resin according to claim 3 or 4, having an epoxy equivalent of 130 to 250 g/equivalent.

**6.** The epoxy resin according to any one of claims 3 to 5, having a melt viscosity at 150°C of 2.0 dPa.s or less.

**7.** A curable resin composition comprising the epoxy resin according to any one of claims 3 to 6.

**8.** A cured product obtained by subjecting the curable resin composition according to claim 7 to a curing reaction.

**9.** A fiber-reinforced composite material comprising the curable resin composition according to claim 7 and reinforcing fibers.

**10.** A fiber-reinforced resin molded product comprising the cured product according to claim 8 and reinforcing fibers.

[Fig.1]

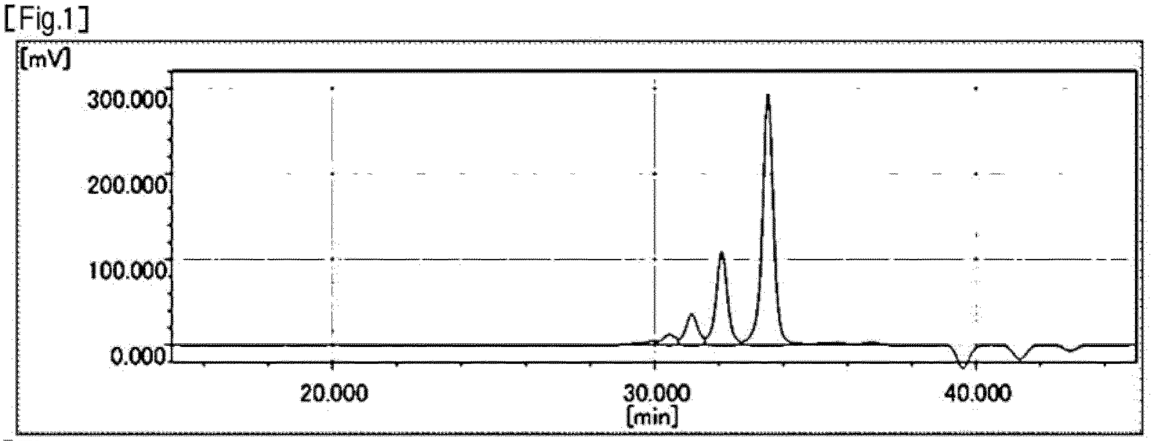


[Fig.2]

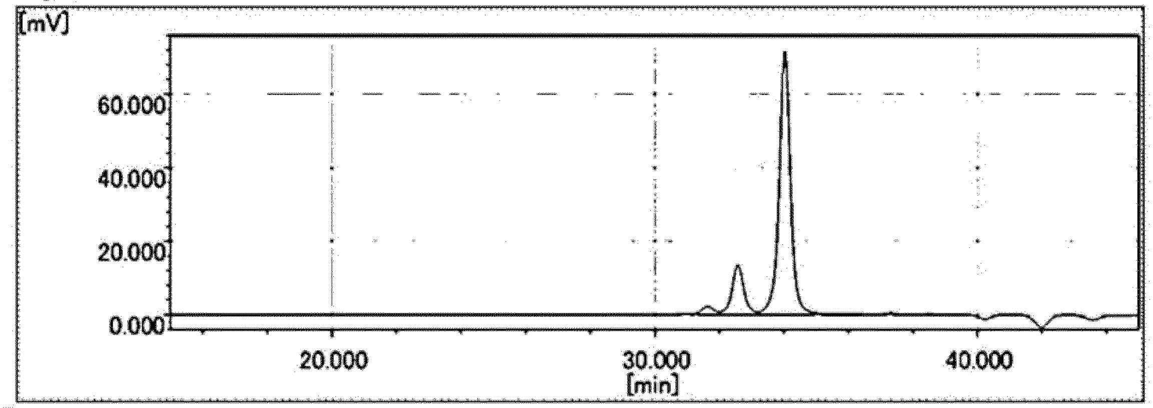


[Fig.3]

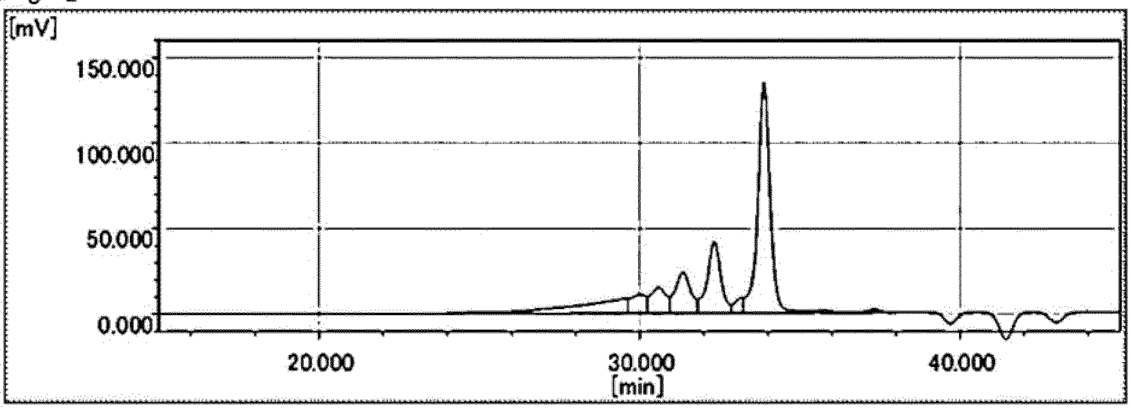


[Fig.4]

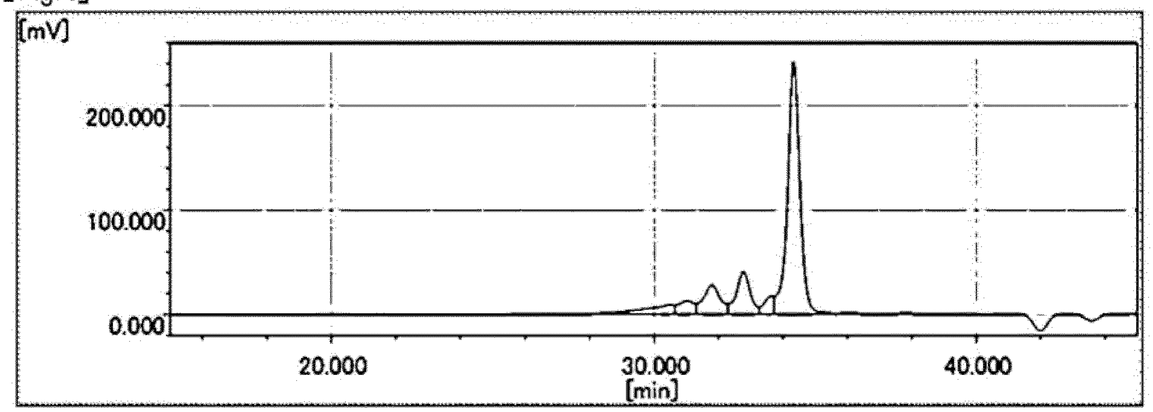

[Fig.5]

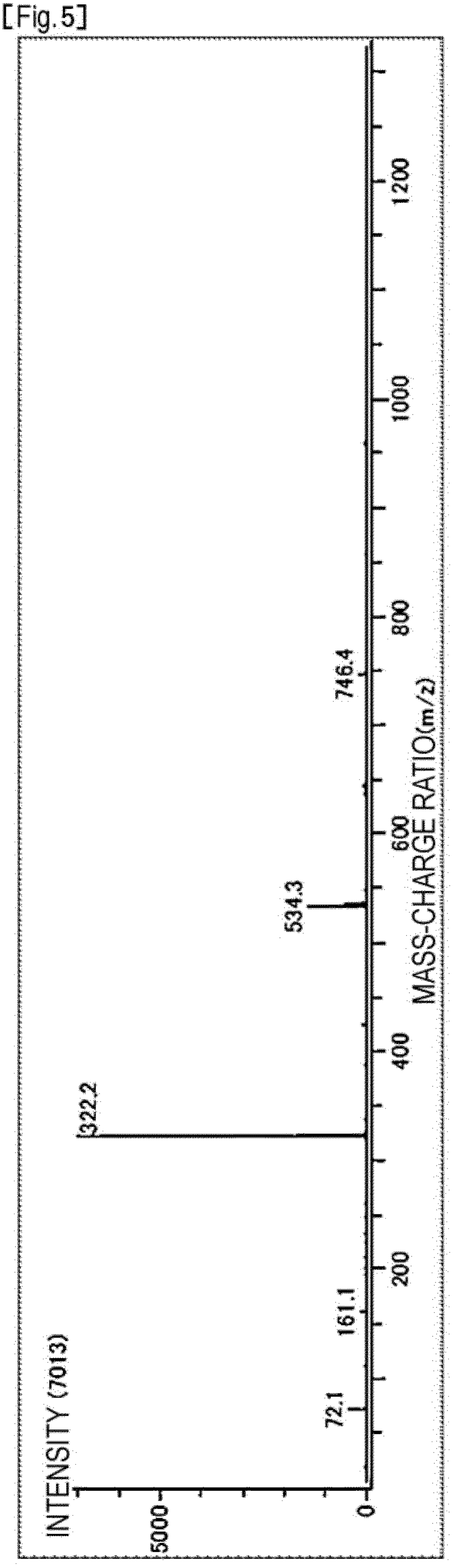
INTENSITY (7013)
5000
0
72.1
161.1
322.2
534.3
746.4
200
400
600
800
1000
1200
MASS-CHARGE RATIO(m/z)

[Fig.6]

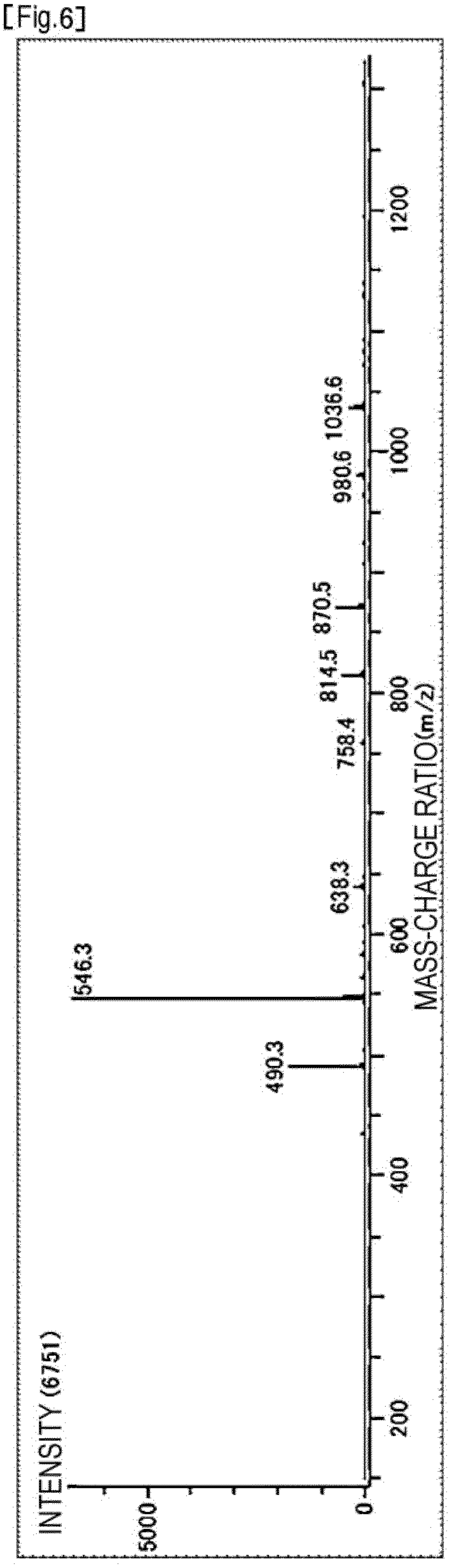
INTENSITY (6751)
5000
0
200
400
600
800
1000
1200
MASS-CHARGE RATIO(m/z)
490.3
546.3
638.3
758.4
814.5
870.5
980.6
1036.6

[Fig.7]

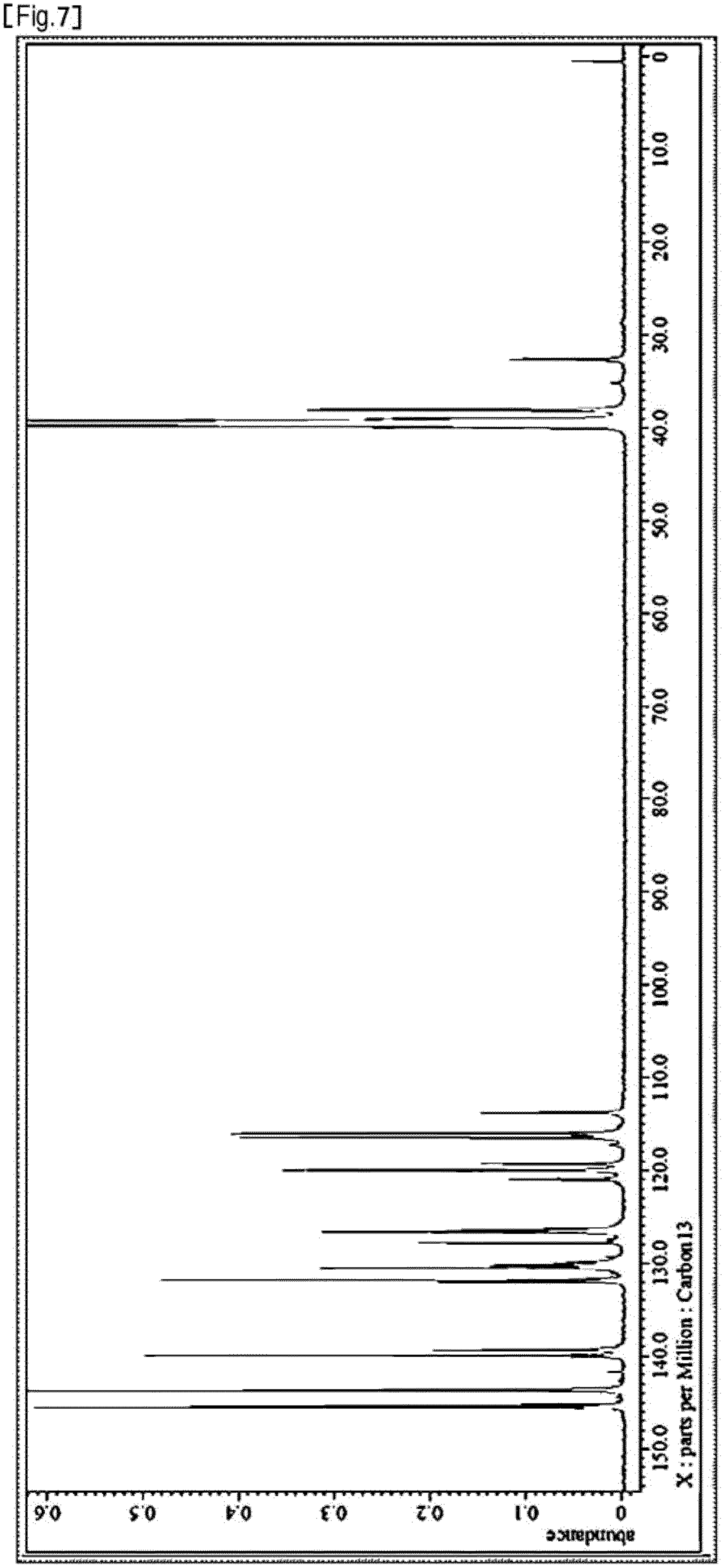
X : parts per Million : Carbon13
abundance
0 10.0 20.0 30.0 40.0 50.0 60.0 70.0 80.0 90.0 100.0 110.0 120.0 130.0 140.0 150.0
0 0.1 0.2 0.3 0.4 0.5 0.6

[Fig.8]

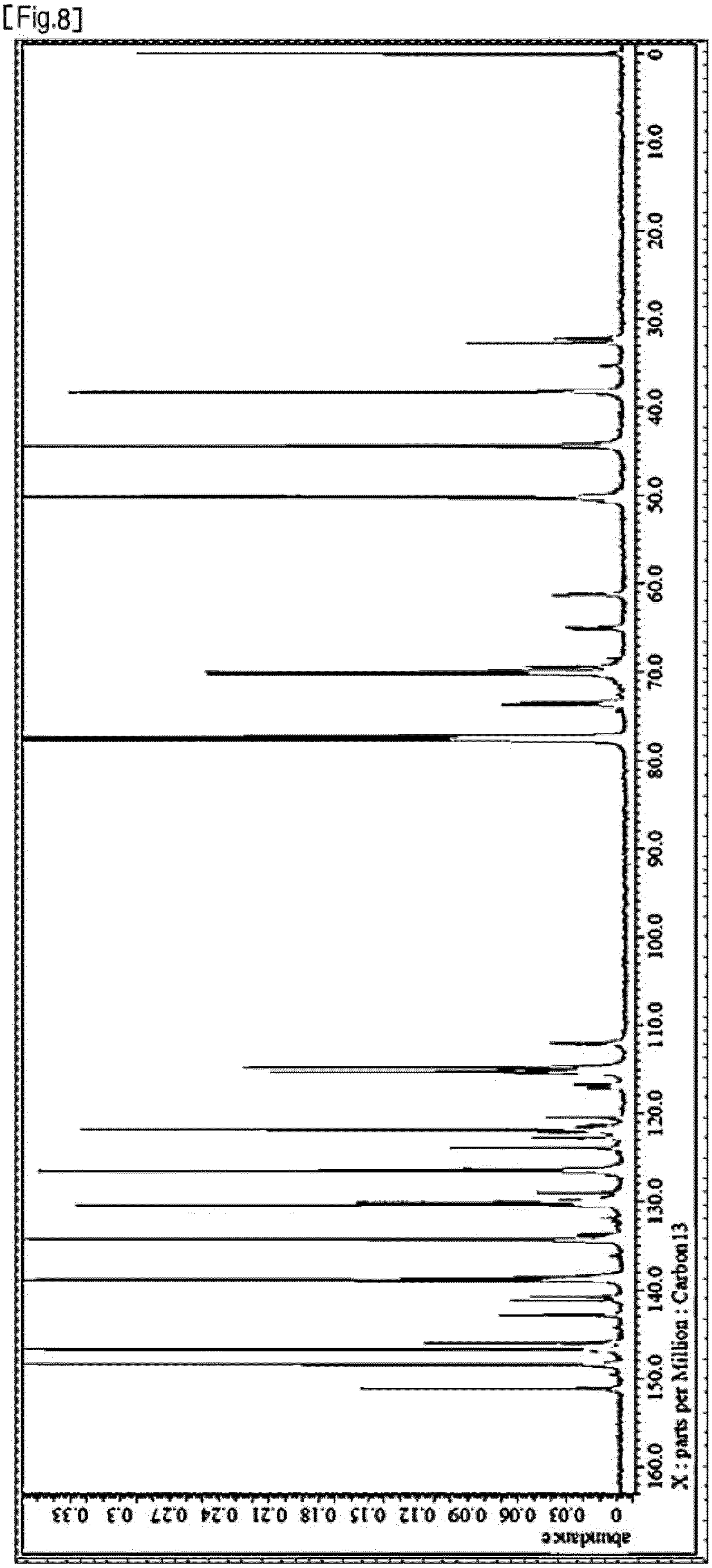

## INTERNATIONAL SEARCH REPORT

International application No.
**PCT/JP2022/018353**

**A. CLASSIFICATION OF SUBJECT MATTER**

***C08G 59/06***(2006.01)i; ***C08G 61/10***(2006.01)i; ***C08K 7/02***(2006.01)i; ***C08L 63/04***(2006.01)i; ***C08J 5/04***(2006.01)i
FI: C08G61/10; C08G59/06; C08L63/04; C08K7/02; C08J5/04 CFC

According to International Patent Classification (IPC) or to both national classification and IPC

**B. FIELDS SEARCHED**

Minimum documentation searched (classification system followed by classification symbols)

C08G59/06; C08G61/10; C08K7/02; C08L63/04; C08J5/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2002-226559 A (NEGISHI, Akio) 14 August 2002 (2002-08-14)<br>claim 1, example 5 | 1, 2<br>3-10 |
| X | JP 2008-189708 A (UBE INDUSTRIES, LTD) 21 August 2008 (2008-08-21)<br>claim 1, paragraphs [0001], [0002], [0007], [0010], [0022], [0026], [0027], [0040] | 1-10 |
| A | JP 2016-190891 A (NIPPON STEEL & SUMIKIN CHEM CO) 10 November 2016 (2016-11-10) | 1-10 |
| A | WO 2007/007827 A1 (UBE INDUSTRIES, LTD) 18 January 2007 (2007-01-18) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 June 2022** | **26 July 2022** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2022/018353**

| Patent document cited in search report | Publication date (day/month/year) | Patent family member(s) | Publication date (day/month/year) |
|---|---|---|---|
| JP 2002-226559 A | 14 August 2002 | (Family: none) | |
| JP 2008-189708 A | 21 August 2008 | (Family: none) | |
| JP 2016-190891 A | 10 November 2016 | (Family: none) | |
| WO 2007/007827 A1 | 18 January 2007 | CN 101208368 A<br>KR 10-2008-0030664 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003201388 A